# EUROPEAN PATENT APPLICATION

(11) **EP 4 797 579 A1**
(43) Date of publication of application: **26.08.2026**
(21) Application number: 24884682.6
(22) Date of filing: 28.10.2024
(51) Int. Cl.: H04L 1/00

(54) **DATA TRANSMISSION METHOD AND APPARATUS**

(30) Priority: 31.10.2023 CN 202311444117
(71) Applicant: HUAWEI TECHNOLOGIES CO., LTD., Shenzhen 518129 (CN)
(72) Inventor: WANG, Xianbin, Shenzhen, Guangdong 518129 (CN); TONG, Jiajie, Shenzhen, Guangdong 518129 (CN); ZHANG, Huazi, Shenzhen, Guangdong 518129 (CN); QIN, Kangjian, Shenzhen, Guangdong 518129 (CN); LIU, Ke, Shenzhen, Guangdong 518129 (CN); WANG, Jun, Shenzhen, Guangdong 518129 (CN); TONG, Wen, Shenzhen, Guangdong 518129 (CN)
(74) Representative: Maiwald GmbH
(86) International application number: PCT/CN2024/127892
(87) International publication number: WO 2025/092679

(57) **Abstract**

This application provides a data transmission method and an apparatus to improve flexibility of a polar code in an IR-HARQ scenario, and relates to the field of wireless communication technologies. In the method, a transmit end polar encodes a to-be-encoded bit sequence to obtain an encoded bit sequence, where the to-be-encoded bit includes a first information bit sequence and a second information bit sequence, a subchannel set corresponding to the first information bit sequence includes a first subchannel set and a second subchannel set, the first subchannel set corresponds to a first subcode of a polar code, the second subchannel set corresponds to a second subcode of the polar code, a subchannel set corresponding to the second information bit sequence includes a third subchannel set and a fourth subchannel set, the third subchannel set corresponds to the first subcode, and the fourth subchannel set corresponds to the second subcode; and the transmit end performs interleaving on the encoded bit sequence, and outputs a result of the interleaving.

## Description

### CROSS-REFERENCE TO RELATED APPLICATIONS

This application claims priority to Chinese Patent Application No. 202311444117.4, filed with the China National Intellectual Property Administration on October 31, 2023 and entitled "DATA TRANSMISSION METHOD AND APPARATUS", which is incorporated herein by reference in its entirety.

### TECHNICAL FIELD

This application relates to the field of wireless communication technologies, and in particular, to a data transmission method and an apparatus.

### BACKGROUND

Because polar (polar) coding is a channel coding scheme that can be rigorously proven to achieve a channel capacity, and has features such as high performance, low complexity, and flexible adaptation, polar coding has been determined by the 3rd generation partnership project (3rd generation partnership project, 3GPP) as a channel coding scheme for control channels in an enhanced mobile broadband (enhanced mobile broadband, eMBB) scenario of 5G.

In an incremental redundancy (incremental redundancy, IR)-hybrid automatic repeat request (hybrid automatic repeat request, HARQ) scenario, an encoded bit sequence corresponding to a U code of a polar code is sent during initial transmission, and an encoded bit sequence corresponding to a V code of the polar code is sent during retransmission.

In implementation of a HARQ transmission mechanism in wireless communication, retransmission resources are determined by system scheduling, which may result in limited or abundant retransmission resources. Therefore, it is preferable for encoding to support rateless (rateless) transmission. However, if the current polar coding scheme is used, communication performance may be affected.

### SUMMARY

This application provides a data transmission method and an apparatus, to improve communication performance.

According to a first aspect, a data transmission method is provided. The method may be performed by a transmit end. The transmit end may be a network device or a terminal device, or may be a chip or a chip system used in a network device or a terminal device. In the method, the transmit end polar encodes a to-be-encoded bit sequence to obtain an encoded bit sequence, where the to-be-encoded bit includes a first information bit sequence and a second information bit sequence, a subchannel set corresponding to the first information bit sequence includes a first subchannel set and a second subchannel set, the first subchannel set corresponds to a first subcode of a polar code, the second subchannel set corresponds to a second subcode of the polar code, a subchannel set corresponding to the second information bit sequence includes a third subchannel set and a fourth subchannel set, the third subchannel set corresponds to the first subcode, and the fourth subchannel set corresponds to the second subcode; and the transmit end performs interleaving on the encoded bit sequence, and outputs a result of the interleaving.

Based on the foregoing solution, the subchannel set corresponding to the first information bit sequence includes a subchannel corresponding to the first subcode and a subchannel corresponding to the second subcode, so that a first encoded bit sequence can include some encoded bits of the first subcode and some encoded bits of the second subcode; and the subchannel set corresponding to the second bit sequence includes the third subchannel set corresponding to the first subcode and the fourth subchannel set corresponding to the second subcode, so that a second encoded bit sequence can include some encoded bits of the first subcode and some encoded bits of the second subcode. This can balance performance between a small quantity of retransmissions and a large quantity of retransmissions, and improve flexibility of a polar code in an IR-HARQ scenario. In addition, this improves encoding flexibility by considering an information bit sequence for initial transmission and an information bit sequence for retransmission during mother code construction.

In a possible implementation of the first aspect, the transmit end performs sub-block interleaving on the encoded bit sequence based on a first length, where the first length is a length of the encoded bit sequence.

Based on the foregoing solution, sub-block interleaving may be performed on the encoded bit sequence based on the first length, to further improve encoding flexibility.

In a possible implementation of the first aspect, sub-block interleaving is performed on the encoded bit sequence based on the first length and a first pattern, where the first pattern is [0 1 2 4 3 5 6 7 8 16 9 17 10 18 11 19 12 20 13 21 14 22 15 23 24 25 26 28 27 29 30 31].

Based on the foregoing solution, sub-block interleaving is performed on the encoded bit sequence based on the first length and the first pattern, so that device complexity can be reduced.

In a possible implementation of the first aspect, rate matching is performed on a result of the sub-block interleaving, where the rate matching includes shortening each sub-block included in the result of the sub-block interleaving.

Based on the foregoing solution, when a rate matching manner includes shortening, each sub-block may be shortened. This provides a shortening manner different from that in a current NR system.

In a possible implementation of the first aspect, shortening each sub-block from back to front, or shortening each bit-reversed sub-block from back to front, or shortening each sub-block in a fixed order.

Based on the foregoing solution, during shortening of each sub-block, each sub-block may be shortened in a specific order. This provides a shortening manner different from that in a current NR system.

According to a second aspect, a data transmission method is provided. The method may be performed by a receive end. The receive end may be a network device or a terminal device, or may be a chip or a chip system used in a network device or a terminal device. In the method, the receive end obtains a received symbol sequence, where the received symbol sequence corresponds to an encoded bit sequence, and the encoded bit sequence is obtained by polar encoding a to-be-encoded bit sequence; and the to-be-encoded bit includes a first information bit sequence and a second information bit sequence, a subchannel set corresponding to the first information bit sequence includes a first subchannel set and a second subchannel set, the first subchannel set corresponds to a first subcode of a polar code, the second subchannel set corresponds to a second subcode of the polar code, a subchannel set corresponding to the second information bit sequence includes a third subchannel set and a fourth subchannel set, the third subchannel set corresponds to the first subcode, and the fourth subchannel set corresponds to the second subcode; and the receive end performs deinterleaving on the received symbol sequence.

In a possible implementation of the second aspect, the receive end performs sub-block deinterleaving on the received symbol sequence based on a first length, where the first length is a length of the encoded bit sequence.

In a possible implementation of the second aspect, sub-block deinterleaving is performed on the first encoded bit sequence based on the first length and a first pattern, where the first pattern is [0 1 2 4 3 5 6 7 8 16 9 17 10 18 11 19 12 20 13 21 14 22 15 23 24 25 26 28 27 29 30 31].

In a possible implementation of the first aspect and the second aspect, the encoded bit sequence includes a first encoded bit sequence corresponding to the first information bit sequence and a second encoded bit sequence corresponding to the second information bit sequence, the first encoded bit sequence is used for retransmission, and the second encoded bit sequence is used for initial transmission; and the first encoded bit sequence includes a first encoded bit set and a second encoded bit set, the first encoded bit set corresponds to the first subcode, the second encoded bit set corresponds to the second subcode, the second encoded bit sequence includes a third encoded bit set and a fourth encoded bit set, the third encoded bit set corresponds to the first subcode, and the fourth encoded bit set corresponds to the second subcode.

Based on the foregoing solution, the first encoded bit sequence and the second encoded bit sequence each can include some encoded bits corresponding to the first subcode and some encoded bits corresponding to the second subcode. This can balance performance between a small quantity of retransmissions and a large quantity of retransmissions, and improve flexibility of a polar code in an IR-HARQ scenario.

In a possible implementation of the first aspect and the second aspect, a subchannel set corresponding to the first information bit sequence includes a fifth subchannel, a subchannel set corresponding to the second information bit sequence includes a sixth subchannel, the fifth subchannel is in a one-to-one correspondence with the sixth subchannel, values of bits on corresponding subchannels in the fifth subchannel and the sixth subchannel are the same, the fifth subchannel corresponds to the first subcode, and the sixth subchannel corresponds to the first subcode.

Based on the foregoing solution, there is a one-to-one corresponding bit pair in the first subcode, so that decoding accuracy can be improved in a case of retransmission.

In a possible implementation of the first aspect and the second aspect, the fifth subchannel is determined based on a seventh subchannel of a polar code bit sequence with a length of N₂, the sixth subchannel is determined based on an eighth subchannel of a polar code bit sequence with a length of N₁, N₂ is the length of the encoded bit sequence, and N₁ is a length of the first encoded bit sequence or a length of the second encoded bit sequence; and the seventh subchannel includes K subchannels with high reliability of the polar code sequence with a length of N₂, the eighth subchannel includes K subchannels with high reliability of the polar code sequence with a length of N₁, and K is a positive integer.

Based on the foregoing solution, a bit pair may be selected from information subchannels with relatively high reliability, and same information bits may be placed on the bit pair, so that information bits can be placed on subchannels with relatively high reliability.

Optionally, the seventh subchannel may be K subchannels with high reliability of a mother code with a length of N₂, and similarly, the eighth information bit is K subchannels with high reliability of a mother code with a length of N₁.

In a possible implementation of the first aspect and the second aspect, the sixth subchannel corresponds to a subchannel that is in a difference set between the seventh subchannel and the eighth subchannel and that corresponds to the first subcode, and the fifth subchannel corresponds to a subchannel that is in a difference set between the eighth subchannel and the seventh subchannel and that corresponds to the first subcode.

Based on this solution, a subchannel corresponding to the first subcode may be selected from information subchannels with relatively high reliability, to determine a one-to-one corresponding bit pair in the first subcode.

In a possible implementation of the first aspect and the second aspect, the sixth subchannel includes a subchannel that is in the seventh subchannel and that corresponds to a part or all of subchannels in a third subchannel set, and the fifth subchannel includes a subchannel that is in the eighth subchannel and that corresponds to a part or all of subchannels in a first subchannel set; and the third subchannel set is a subchannel that is in the subchannel set corresponding to the second information bit sequence and that corresponds to the first subcode, and the first subchannel set is a subchannel that is in the subchannel set corresponding to the first information bit sequence and that corresponds to the first subcode.

Based on this solution, a bit that corresponds to a first subchannel and that is included in the first encoded bit sequence in data retransmission and a bit that corresponds to a third subchannel and that is included in the second encoded bit sequence in initial data transmission may be determined from the determined one-to-one corresponding bit pair in the first subcode, to determine bits in a one-to-one correspondence in data retransmission and initial data transmission.

In a possible implementation of the first aspect and the second aspect, the sixth subchannel includes a part or all of subchannels that are in the seventh subchannel and that correspond to the third subchannel set, and does not include a subchannel that is in the eighth subchannel and that corresponds to the third subchannel set.

Based on the foregoing solution, a one-to-one corresponding bit pair includes one bit that is in a transmitted bit pair and that is for data retransmission, and the other bit that is in the transmitted bit pair and that is for initial data transmission; and the one bit that is in the transmitted bit pair and that is for data retransmission is different from the other bit that is in the transmitted bit pair and that is for initial data transmission.

In a possible implementation of the first aspect and the second aspect, the subchannel set corresponding to the first information bit sequence includes a ninth subchannel, the subchannel set corresponding to the second information bit sequence includes a tenth subchannel, the ninth subchannel is in a one-to-one correspondence with the tenth subchannel, values on corresponding subchannels in the ninth subchannel and the tenth subchannel are the same, the ninth subchannel corresponds to the second subcode, and the tenth subchannel corresponds to the second subcode.

Based on the foregoing solution, there is a one-to-one corresponding bit pair in the second subcode, so that decoding accuracy can be improved in a case of retransmission.

In a possible implementation of the first aspect and the second aspect, the ninth subchannel is determined based on the seventh subchannel of the polar code bit sequence with a length of N₂, the tenth subchannel is determined based on the eighth subchannel of the polar code bit sequence with a length of N₁, N₂ is the length of the encoded bit sequence, and N₁ is the length of the first encoded bit sequence or the length of the second encoded bit sequence; and the seventh subchannel includes K subchannels with high reliability of the polar code sequence with a length of N₂, the eighth subchannel includes K subchannels with high reliability of the polar code sequence with a length of N₁, and K is a positive integer. Based on this solution, a subchannel corresponding to the second subcode may be selected from information subchannels with relatively high reliability, to determine a one-to-one corresponding bit pair in the second subcode.

In a possible implementation of the first aspect and the second aspect, the tenth subchannel includes a subchannel that is in the difference set between the seventh subchannel and the eighth bit and that corresponds to the second subcode, and the ninth subchannel includes a subchannel that is in the difference set between the eighth subchannel and the seventh subchannel and that corresponds to the second subcode.

Based on this solution, a second subchannel that is included in the first information bit in data retransmission and a fourth subchannel that is included in the second information bit in initial data transmission may be determined from the determined one-to-one corresponding bit pair in the second subcode, to determine specific bits in a one-to-one correspondence in data retransmission and initial data transmission.

In a possible implementation of the first aspect and the second aspect, the tenth subchannel includes a part or all of subchannels that are in the seventh subchannel and that correspond to a fourth subchannel set, and the ninth subchannel includes a part or all of subchannels that are in the eighth subchannel and that correspond to a second subchannel set; and the fourth subchannel set is a subchannel that is in the subchannel set corresponding to the second information bit sequence and that corresponds to the second subcode, and the second subchannel set is a subchannel that is in the subchannel set corresponding to the first information bit sequence and that corresponds to the second subcode.

Based on the foregoing solution, a one-to-one corresponding bit pair includes one bit that is in a transmitted bit pair and that is for data retransmission, and the other bit that is in the transmitted bit pair and that is for initial data transmission; and the one bit that is in the transmitted bit pair and that is for data retransmission is different from the other bit that is in the transmitted bit pair and that is for initial data transmission.

In a possible implementation of the first aspect and the second aspect, the tenth subchannel includes the part or all of the subchannels that are in the seventh subchannel and that correspond to the fourth subchannel, and does not include a subchannel that is in the eighth subchannel and that corresponds to the fourth subchannel.

Based on the foregoing solution, a one-to-one corresponding bit pair includes one bit that is in a transmitted bit pair and that is for data retransmission, and the other bit that is in the transmitted bit pair and that is for initial data transmission; and the one bit that is in the transmitted bit pair and that is for data retransmission is different from the other bit that is in the transmitted bit pair and that is for initial data transmission.

According to a third aspect, a communication apparatus is provided, including a processing unit and a transceiver unit.

The processing unit is configured to polar encode a to-be-encoded bit sequence to obtain an encoded bit sequence, where the to-be-encoded bit includes a first information bit sequence and a second information bit sequence, a subchannel set corresponding to the first information bit sequence includes a first subchannel set and a second subchannel set, the first subchannel set corresponds to a first subcode, the second subchannel set corresponds to a second subcode, a subchannel set corresponding to the second information bit sequence includes a third subchannel set and a fourth subchannel set, the third subchannel set corresponds to the first subcode, the fourth subchannel set corresponds to the second subcode, and a polar code includes the first subcode and the second subcode. The processing unit is further configured to perform interleaving on the encoded bit sequence. Transceiver unit is configured to output a result of the interleaving.

In a possible implementation of the third aspect, the processing unit is specifically configured to perform sub-block interleaving on the encoded bit sequence based on a first length, where the first length is a length of the encoded bit sequence.

In a possible implementation of the third aspect, the processing unit is specifically configured to perform sub-block interleaving on the first encoded bit sequence based on the first length and a first pattern, where the first pattern is [0 1 2 4 3 5 6 7 8 16 9 17 10 18 11 19 12 20 13 21 14 22 15 23 24 25 26 28 27 29 30 31].

In a possible implementation of the third aspect, the processing unit is further configured to perform rate matching on a result of the sub-block interleaving, where the rate matching includes shortening each sub-block included in the result of the sub-block interleaving.

In a possible implementation of the third aspect, the processing unit is specifically configured to: shorten each sub-block from back to front, or shorten each bit-reversed sub-block from back to front, or shorten each sub-block in a fixed order.

According to a fourth aspect, a communication apparatus is provided, including a processing unit and a transceiver unit.

The transceiver unit is configured to obtain a received symbol sequence, where the received symbol sequence corresponds to an encoded bit sequence, and the encoded bit sequence is obtained by polar encoding a to-be-encoded bit sequence; and the to-be-encoded bit includes a first information bit sequence and a second information bit sequence, a subchannel set corresponding to the first information bit sequence includes a first subchannel set and a second subchannel set, the first subchannel set corresponds to a first subcode, the second subchannel set corresponds to a second subcode, a subchannel set corresponding to the second information bit sequence includes a third subchannel set and a fourth subchannel set, the third subchannel set corresponds to the first subcode, the fourth subchannel set corresponds to the second subcode, and a polar code includes the first subcode and the second subcode. The processing unit is configured to perform deinterleaving on the received symbol sequence.

In a possible implementation of the second aspect, the processing unit is specifically configured to performing sub-block deinterleaving on the received symbol sequence based on a first length, where the first length is a length of the encoded bit sequence.

In a possible implementation of the fourth aspect, the processing unit is specifically configured to perform sub-block deinterleaving on the first encoded bit sequence based on the first length and a first pattern, where the first pattern is [0 1 2 4 3 5 6 7 8 16 9 17 10 18 11 19 12 20 13 21 14 22 15 23 24 25 26 28 27 29 30 31].

In a possible implementation of the third aspect and the fourth aspect, the sixth subchannel is determined based on a seventh subchannel of a polar code bit sequence with a length of N₂, the fifth subchannel is determined based on an eighth subchannel of a polar code bit sequence with a length of N₁, N₂ is the length of the encoded bit sequence, and N₁ is a length of the first encoded bit sequence or a length of the second encoded bit sequence; and the seventh subchannel includes K subchannels with high reliability of the polar code sequence with a length of N₂, the eighth subchannel includes K subchannels with high reliability of the polar code sequence with a length of N₁, and K is a positive integer.

Optionally, the seventh subchannel may be K subchannels with high reliability of a mother code with a length of N₂, and similarly, the eighth information bit is K subchannels with high reliability of a mother code with a length of N₁.

In a possible implementation of the third aspect and the fourth aspect, the sixth subchannel corresponds to a subchannel that is in a difference set between the seventh subchannel and the eighth subchannel and that corresponds to the first subcode, and the fifth subchannel corresponds to a subchannel that is in a difference set between the eighth subchannel and the seventh subchannel and that corresponds to the first subcode.

In a possible implementation of the third aspect and the fourth aspect, the sixth subchannel includes a subchannel that is in the seventh subchannel and that corresponds to a part or all of subchannels in a third subchannel set, and the fifth subchannel includes a subchannel that is in the eighth subchannel and that corresponds to a part or all of subchannels in a first subchannel set; and the third subchannel set is a subchannel that is in the subchannel set corresponding to the second information bit sequence and that corresponds to the first subcode, and the first subchannel set is a subchannel that is in the subchannel set corresponding to the first information bit sequence and that corresponds to the first subcode.

In a possible implementation of the third aspect and the fourth aspect, the sixth subchannel includes a part or all of subchannels that are in the seventh subchannel and that correspond to the third subchannel set, and does not include a subchannel that is in the eighth subchannel and that corresponds to the third subchannel set.

In a possible implementation of the third aspect and the fourth aspect, the subchannel set corresponding to the first information bit sequence includes a ninth subchannel, the subchannel set corresponding to the second information bit sequence includes a tenth subchannel, the ninth subchannel is in a one-to-one correspondence with the tenth subchannel, values on corresponding subchannels in the ninth subchannel and the tenth subchannel are the same, the ninth subchannel corresponds to the second subcode, and the tenth subchannel corresponds to the second subcode.

In a possible implementation of the third aspect and the fourth aspect, the tenth subchannel is determined based on the seventh subchannel of the polar code bit sequence with a length of N₂, the ninth subchannel is determined based on the eighth subchannel of the polar code bit sequence with a length of N₁, N₂ is the length of the encoded bit sequence, and N₁ is the length of the first encoded bit sequence or the length of the second encoded bit sequence; and the seventh subchannel includes K subchannels with high reliability of the polar code sequence with a length of N₂, the eighth subchannel includes K subchannels with high reliability of the polar code sequence with a length of N₁, and K is a positive integer.

In a possible implementation of the third aspect and the fourth aspect, the tenth subchannel is determined based on the seventh subchannel of the polar code bit sequence with a length of N₂, the ninth subchannel is determined based on the eighth subchannel of the polar code bit sequence with a length of N₁, N₂ is the length of the encoded bit sequence, and N₁ is the length of the first encoded bit sequence or the length of the second encoded bit sequence; and the seventh subchannel includes K subchannels with high reliability of the polar code sequence with a length of N₂, the eighth subchannel includes K subchannels with high reliability of the polar code sequence with a length of N₁, and K is a positive integer. Based on this solution, a subchannel corresponding to the second subcode may be selected from information subchannels with relatively high reliability, to determine a one-to-one corresponding bit pair in the second subcode.

In a possible implementation of the third aspect and the fourth aspect, the tenth subchannel includes a subchannel that is in the difference set between the seventh subchannel and the eighth bit and that corresponds to the second subcode, and the ninth subchannel includes a subchannel that is in the difference set between the eighth subchannel and the seventh subchannel and that corresponds to the second subcode.

In a possible implementation of the third aspect and the fourth aspect, the tenth subchannel includes the part or all of the subchannels that are in the seventh subchannel and that correspond to the fourth subchannel, and does not include a subchannel that is in the eighth subchannel and that corresponds to the fourth subchannel.

According to a fifth aspect, this application provides a communication apparatus, including a processor, where the processor is coupled to a memory, the memory is configured to store a computer program or instructions, and the processor is configured to execute the computer program or the instructions, to perform the method according to each implementation of the first aspect and the second aspect. The memory may be located inside or outside the apparatus. There are one or more processors.

According to a sixth aspect, this application provides a communication apparatus, including a processor and an interface circuit. The interface circuit is configured to communicate with another apparatus, and the processor is configured to perform the method according to each implementation of the first aspect and the second aspect.

According to a seventh aspect, a communication apparatus is provided. The apparatus includes a logic circuit and an input/output interface.

According to an eighth aspect, this application provides a communication system, including a transmit end and a receive end that are configured to perform the method according to each implementation of the first aspect and the second aspect.

According to a ninth aspect, this application further provides a chip system, including a processor, configured to perform the method according to each implementation of the first aspect and the second aspect.

According to a tenth aspect, this application further provides a computer program product, including computer-executable instructions. When the computer-executable instructions are run on a computer, the method according to each implementation of the first aspect and the second aspect is performed.

According to an eleventh aspect, this application further provides a computer-readable storage medium. The computer-readable storage medium stores a computer program or instructions. When the instructions are run on a computer, the method according to each implementation of the first aspect and the second aspect is implemented.

For technical effects achieved in the third aspect to the eleventh aspect, refer to the technical effects in the first aspect and the second aspect. Details are not described herein again.

### BRIEF DESCRIPTION OF DRAWINGS

FIG. 1 is a diagram of a communication system according to an embodiment of this application;
FIG. 2 is a diagram of polar encoding according to an embodiment of this application;
FIG. 3 is a diagram of IR-HARQ according to an embodiment of this application;
FIG. 4A(a) and FIG. 4A(b) are diagrams of a rateless transmission scenario according to an embodiment of this application;
FIG. 4B(a) and FIG. 4B(b) are diagrams of another rateless transmission scenario according to an embodiment of this application;
FIG. 5A and FIG. 5B are diagrams of H1 and H2 according to an embodiment of this application;
FIG. 6 is a diagram of a rate matching position according to an embodiment of this application;
FIG. 7A is a diagram of positions of a copy bit and a copied bit according to an embodiment of this application;
FIG. 7B is a diagram of positions of another copy bit and another copied bit according to an embodiment of this application;
FIG. 8 is a diagram of a data transmission method according to an embodiment of this application;
FIG. 9A is a diagram of starting positions of a first encoded bit sequence and a second encoded bit sequence according to an embodiment of this application;
FIG. 9B is a diagram of starting positions of another first encoded bit sequence and another second encoded bit sequence according to an embodiment of this application;
FIG. 10 is another diagram of H1 and H2 according to an embodiment of this application;
FIG. 11 is a schematic flowchart of polar encoding according to an embodiment of this application;
FIG. 12 is a diagram of a communication apparatus according to an embodiment of this application;
FIG. 13 is a diagram of another communication apparatus according to an embodiment of this application;
FIG. 14 is a diagram of another communication apparatus according to an embodiment of this application; and
FIG. 15 is a diagram of another communication apparatus according to an embodiment of this application.

### DESCRIPTION OF EMBODIMENTS

Embodiments of this application may be applied to a plurality of fields that use polar (polar) coding, for example, the fields of data storage, optical network communication, and wireless communication. The field of wireless communication may include but is not limited to a 5th generation (5th generation, 5G) mobile communication system, a future communication system (for example, a 6G communication system), a satellite communication system, a narrowband-internet of things (narrowband-internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, and three application scenarios of the 5G mobile communication system: eMBB, ultra-reliable low-latency communication (ultra-reliable low-latency communication, URLLC), and massive machine-type communications (massive machine-type communications, mMTC).

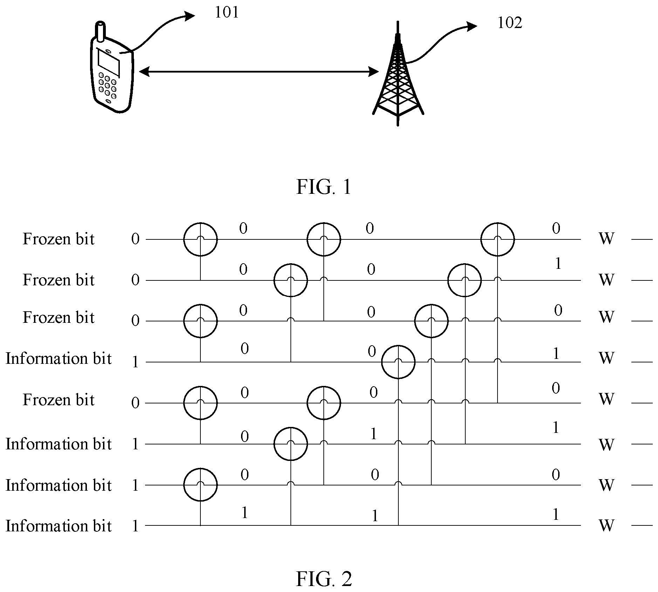

With reference to FIG. 1, the following describes a communication system to which a data transmission method provided in embodiments of this application is applicable. Refer to FIG. 1. A communication system 100 includes a transmit end 101 and a receive end 102. The transmit end 101 may be a network device or a terminal device, and the receive end 102 may be a network device or a terminal device. Optionally, when the transmit end 101 is a network device, the receive end 102 may be a terminal device; or when the receive end 102 is a network device, the transmit end 101 may be a terminal device.

The transmit end 101 may include an encoder. The transmit end 101 may polar encode to-be-encoded bits through the encoder, and output an encoded codeword. The encoded codeword may be transmitted on a channel to the receive end 102 after rate matching, interleaving, and modulation. The receive end 102 may include a decoder. The receive end 102 may receive and demodulate a signal from the transmit end 101. The receive end 102 may decode the received signal through the decoder.

The terminal device in this application includes a device that provides voice and/or data connectivity for a user. Specifically, the terminal device includes a device that provides voice for a user, or a device that provides data connectivity for a user, or a device that provides voice and data connectivity for a user. For example, the terminal device may include a handheld device with a wireless connection function or a processing device connected to a wireless modem. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), a satellite, an uncrewed aerial vehicle, a balloon, an aircraft, or the like. For example, the terminal device may include a mobile phone (or referred to as a "cellular" phone), a computer having a mobile terminal device, or a portable, pocket-sized, hand-held, or computer built-in mobile apparatus. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, a radio frequency identification (radio frequency identification, RFID) device, a sensor, a global positioning system (global positioning system, GPS), or a laser scanner. As an example instead of a limitation, in embodiments of this application, the terminal device may alternatively be a wearable device. The wearable device may also be referred to as a wearable intelligent device, an intelligent wearable device, or the like, and is a general term for wearable devices developed by intelligently designing everyday wearing by applying wearable technologies. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

The network device in this application includes, for example, an access network (access network, AN) device, such as a base station (for example, an access point), and may be a device that is in an access network and that communicates with a wireless terminal device over an air interface through one or more cells. Alternatively, the network device is, for example, a road side unit (road side unit, RSU) in a vehicle-to-everything (vehicle-to-everything, V2X) technology. The network device may include an evolved NodeB (NodeB or eNB or e-NodeB, evolved NodeB) in a long term evolution (long term evolution, LTE) system or a long term evolution-advanced (long term evolution-advanced, LTE-A) system, or may include a next generation NodeB (next generation NodeB, gNB) in an evolved packet core (evolved packet core, EPC) system, a 5th generation (5th generation, 5G) mobile communication system, or a new radio (new radio, NR) system (also referred to as an NR system for short), or may include a central unit (central unit, CU) and a distributed unit (distributed unit, DU) in a cloud radio access network (cloud radio access network, Cloud RAN) system, a satellite, an uncrewed aerial vehicle, a balloon, an aircraft, or the like. This is not limited in embodiments of this application.

Because polar (polar) coding is a channel coding scheme that can be rigorously proven to achieve a channel capacity, and has features such as high performance, low complexity, and flexible adaptation, polar coding has been determined by the 3rd generation partnership project (3rd generation partnership project, 3GPP) as a channel coding scheme for control channels in an enhanced mobile broadband (enhanced mobile broadband, eMBB) scenario of 5G.

FIG. 2 is a diagram of polar encoding. In FIG. 2, a corresponding code length is 8. Each circle in each row represents a summation of a bit in a row in which the circle is located and a bit in a row that the circle reaches, and a bit on a right side of the circle is a summation result. For example, a 1^{st} circle in a row in which a 1^{st} frozen bit is located means summing the frozen bit 0 in the row in which the circle is located, namely, a 1^{st} row, and a bit 0 in a row that the circle reaches, namely, a 2^{nd} row, and a summation result is 0.

u₀ to u₇ are to-be-encoded bits. The to-be-encoded bits are classified into two types based on an order of reliability of corresponding bit subchannels: frozen (frozen) bits and information (data) bits. A bit subchannel with relatively low reliability is set as a frozen bit subchannel, and a bit value is usually 0. A bit subchannel with relatively high reliability is set as an information bit subchannel, and is used to carry an information bit. As shown in FIG. 2, u₇, u₆, u₅, and u₃ are four bit subchannels with highest reliability, and are set as information bits; and u₄, u₂, u₁, and u₀ are four bits with lowest reliability, and are set as frozen (frozen) bits.

It should be noted that frozen bit subchannels are known to the receive end and the transceiver end during data transmission. It may be understood that, in this specification, a bit subchannel may also be referred to as a subchannel, and similarly, a bit subchannel set may also be referred to as a subchannel set.

In addition, in polar encoding, a polar code includes a U code and a V code. For example, a length of the polar code is N; a first half of the polar code, such as a 1^{st} bit to an (N/2)^{th} bit, forms the V code of the polar code; and a second half of the polar code, such as an (N+1)^{th} bit, forms the U code of the polar code. It can be learned from FIG. 2 that, the code length is 8. In this case, first 4 bits u₀ to u₃ may correspond to the V code, and last 4 bits u₄ to u₇ may correspond to the U code.

Currently, mainstream polar decoding methods may be classified into two types based on decoding sequences of the polar decoding methods: sequential polar decoding and non-sequential polar decoding. The sequential polar decoding means that a decoder performs bit-by-bit decoding by bit subchannels based on sequential nature of polar design. The non-sequential polar decoding means that a decoder outputs decoding results in parallel based on another structure (such as a Tanner graph or a Trellis graph) of a polar code. Currently, main sequential polar decoding algorithms include successive cancellation (successive cancellation, SC) decoding, successive cancellation list (successive cancellation list, SCL) decoding, successive cancellation stack (successive cancellation stack, SCS) decoding, cyclic redundancy check-aided successive cancellation list (cyclic redundancy check-aided successive cancellation list, CA-SCL) decoding, and the like. Non-sequential decoding methods mainly include belief propagation (belief propagation, BP) decoding, and the like. In terms of decoding performance, SC decoding is the worst but achieves a reduced decoding latency, BP decoding is slightly better than SC decoding, SCL decoding achieves significant improvement over SC decoding, and CA-SCL enables a polar code to outperform a low-density parity-check (low-density parity-check code, LDPC) code and a turbo code (turbo code). Therefore, SCL decoding and CA-SCL decoding are mainly used in practical systems at present.

The following describes a hybrid automatic repeat request technology.

Hybrid automatic repeat request (hybrid automatic repeat request, HARQ) is a technology formed by combining forward error correction coding with automatic repeat request. HARQ determines, based on an acknowledgment (acknowledgement, ACK) or a negative acknowledgment (non-acknowledgement, NACK), whether retransmission needs to be performed. A transmit end sends data to a receive end. When the receive end cannot decode the data, the receiving device retains the received data, and sends a NACK through a backward channel. The transmit end retransmits the initially transmitted data. After receiving the retransmitted data, the receive end combines the retransmitted data with the initially transmitted data, and then performs decoding. A basic working procedure is as follows:

First, the transmit end sends an encoded data packet as initially transmitted data. The receive end receives the initially transmitted data, and attempts to decode the initially transmitted data. If the receive end successfully decodes the initially transmitted data, the receive end feeds back an ACK to the transmit end, and the transmit end may stop, based on the ACK, sending the data. If the receive end does not successfully decode the initially transmitted data, the receive end may buffer the received initially transmitted data or corresponding demodulated soft information, and may feed back a NACK to the transmit end or may not send feedback information to the transmit end. When the transmit end receives the NACK or does not receive the ACK, the transmit end continues to send the re-encoded data as incremental redundancy (incremental redundancy, IR). In this way, the receive end can perform joint decoding using the data received from the two transmissions. Compared with sending data in a single transmission, HARQ sends the data in a plurality of transmissions and allows sending of the data to be stopped when decoding succeeds, thereby improving system throughput. If the initial transmission succeeds, the data does not need to be retransmitted, which amounts to saving spectrum resources and improving spectral efficiency. If the initial transmission fails, the receive end performs joint decoding on the data received from the two transmissions, which can still achieve error correction performance of a long code.

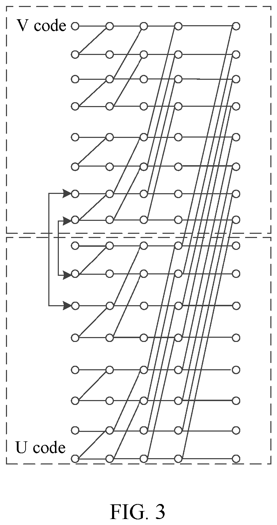

FIG. 3 shows an IR-HARQ solution based on a polar code. A first part, denoted as a U code of the polar code, corresponds to initial transmission and has a length of 8. A second part, denoted as a V code of the polar code, corresponds to retransmission and has a length of 8. Same information bits are placed on a bit subchannel of the first part and a bit subchannel of the second part that is connected to the bit subchannel of the first part. During decoding, if the U code is separately decoded, a first bit subchannel of the U code and a second bit subchannel of the V code are information bit subchannels; or if the U code and the V code are jointly decoded, the initial transmission and the retransmission may be combined to form a polar code with a length of 16. The first bit subchannel is an information bit. During decoding of the second bit subchannel, a result of the decoding is already obtained by decoding the first bit subchannel on which a same information bit as that on the second bit subchannel is placed. Therefore, the second bit subchannel becomes a known value, and may be understood as a dynamic frozen position. In this application, the bit on the first bit subchannel and the bit on the second bit subchannel are referred to as a one-to-one corresponding bit pair, or a copy bit and a copied bit.

According to the solution shown in FIG. 3, regardless of whether the U code is separately decoded or the U code and the V code are jointly decoded, an information bit subchannel is always carried on a subchannel with high reliability, to ensure optimal decoding performance. From the perspective of code rate allocation, it is understood that the foregoing one-to-one corresponding bit pair between the U code and the V code is equivalent to "relocating" the information bit subchannel of the U code to the V code, to achieve optimal allocation of code rates between the U code and the V code.

In implementation of a HARQ transmission mechanism in wireless communication, retransmission resources are determined by system scheduling, which may result in limited or abundant retransmission resources. Therefore, it is preferable for encoding to support rateless (rateless) transmission, meaning that encoding can be completed in advance and then a corresponding quantity of codeword bits can be extracted from an encoded bit sequence for sending based on a size of a retransmission resource. In other words, in rateless transmission, a code rate is not determined in advance, but is determined after a resource is given.

A rateless code is required to ensure that performance always remains close to optimal regardless of a quantity of codeword bits to be sent. For a polar code, there are two requirements as follows:
(1) Information bits are always on channels with high reliability regardless of a quantity of codeword bits to be sent.
(2) An optimal polar code for a small quantity of retransmissions is a subcode of an optimal polar code for a large quantity of retransmissions.

However, reliability of sub-channels and an order of the subchannels change with an increase in codeword bits, making it usually difficult for a design of a polar code to satisfy the foregoing requirements. As a result, when a retransmission length is 8, a 7^{th} bit subchannel and an 8^{th} bit subchannel are set as information positions. However, when the retransmission length is 2, the 7^{th} bit subchannel and the 8^{th} bit subchannel need to be set as frozen positions. Therefore, regardless of whether the polar code is constructed based on the retransmission length of 2 or the retransmission length of 8, transmission performance in the other scenario is affected.

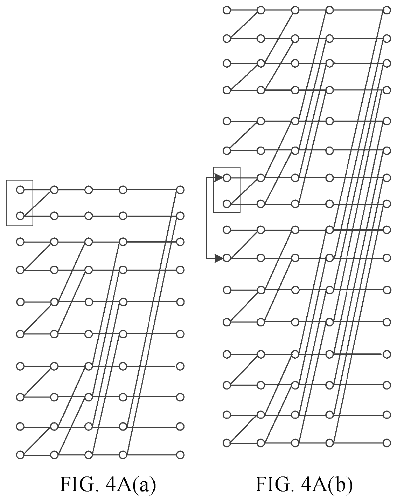

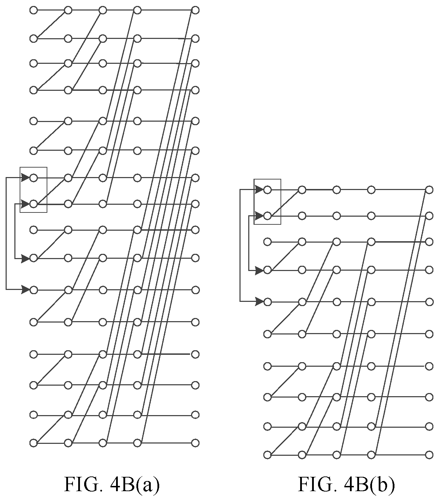

With reference to FIG. 4A(a) and FIG. 4A(b), if a polar code is constructed based on a retransmission length of 2, a 7^{th} bit subchannel and an 8^{th} bit subchannel in FIG. 4A(a) are configured as frozen positions due to insufficient capacities. However, it can be learned from b that when the retransmission length is 8, the 7^{th} bit subchannel and the 8^{th} bit subchannel are subchannels with high reliability. In other words, if the polar code is constructed based on the retransmission length of 2, when a retransmission resource is relatively large, subchannels with high reliability are wasted, resulting in degraded performance.

With reference to FIG. 4A(a) and FIG. 4A(b), if a polar code is constructed based on a retransmission length of 8, a 7^{th} bit subchannel and an 8^{th} bit subchannel in FIG. 4A(a) are set as information bit subchannels. However, it can be learned from b that when the retransmission length is 2, the 7^{th} bit subchannel and the 8^{th} bit subchannel are set as frozen positions. In other words, if the polar code is constructed based on the retransmission length of 8, when a retransmission resource is relatively small, an information bit is placed at an extremely unreliable position, resulting in a system error point.

In view of this, an embodiment of this application provides a data transmission method, to implement rateless transmission in polar codes. In the method, the transmit end polar encodes a to-be-encoded bit sequence to obtain an encoded bit sequence, where the to-be-encoded bit includes a first information bit sequence and a second information bit sequence, a bit subchannel set corresponding to the first information bit sequence includes a first bit subchannel set and a second bit subchannel set, the first bit subchannel set corresponds to a first subcode, the second bit subchannel set corresponds to a second subcode, a bit subchannel set corresponding to the second information bit sequence includes a third bit subchannel set and a fourth bit subchannel set, the third bit subchannel set corresponds to the first subcode, the fourth bit subchannel set corresponds to the second subcode, and a polar code includes the first subcode and the second subcode; and the transmit end performs interleaving on the encoded bit sequence, and outputs a result of the interleaving.

Based on the foregoing solution, the bit subchannel set corresponding to the first information bit sequence includes a bit subchannel corresponding to the first subcode and a bit subchannel corresponding to the second subcode, so that a first encoded bit sequence can include some encoded bits of the first subcode and some encoded bits of the second subcode; and the bit subchannel set corresponding to the second bit sequence includes the third bit subchannel set corresponding to the first subcode and the fourth bit subchannel set corresponding to the second subcode, so that a second encoded bit sequence can include some encoded bits of the first subcode and some encoded bits of the second subcode. This can balance performance between a small quantity of retransmissions and a large quantity of retransmissions, and improve flexibility of a polar code in an IR-HARQ scenario. In addition, this improves encoding flexibility by considering an information bit sequence for initial transmission and an information bit sequence for retransmission during mother code construction.

For ease of understanding of the technical solutions provided in embodiments of this application, the following describes a technical solution in which the transmit end performs code construction in an embodiment of this application. The transmit end may input an encoding parameter. For example, the transmit end may input a to-be-encoded information bit sequence S̅ and a length K, and a length of an encoded bit sequence N₂=2*N₁, where K ≤ N₁, and K is a sum of a quantity of information bits and a quantity of cyclic redundancy check (cyclic redundancy check, CRC) bits. The encoded bit sequence with a total length of N₂ may be sent in two transmissions or in a single transmission. Sending in a plurality of transmissions may be understood as a HARQ scenario. In this embodiment of this application, an example in which sending is performed in two transmissions and a length of the 1^{st} transmission and a length of the 2^{nd} transmission are both N₁ is used for description.

Based on this, the transmit end may determine a mother code length. For example, the transmit end may determine a mother code length N₂ based on K and E₁. Optionally, for a manner in which the transmit end determines the mother code length, refer to a current manner of determining a mother code length in NR. For example, the transmit end sets $Ê = {2}^{\left⌈{log}_{2}\left(E\right)\right⌉}$. _{If} $\frac{K}{E} < \frac{9}{16}$ and ${N}_{2} = \frac{Ê}{2}$; otherwise, N₂ = Ê.

After determining the mother code length, the transmit end may determine a rate matching manner. Optionally, for a manner in which the transmit end determines the rate matching manner, refer to a current manner of determining a rate matching manner in NR. For example, if E>N₂, repetition (rep) is selected as the rate matching manner; if E≤N₂ and $\frac{K}{E} < \frac{7}{16}$, puncturing (puncture) is selected as the rate matching manner; or if E≤N₂ and $\frac{K}{E} \geq \frac{7}{16}$, shortening (shorten) is selected as the rate matching manner.

The transmit end may construct a subcode H1 for initial transmission and a subcode H2 for retransmission. Lengths of H1 and H2 may be the same or different.

In a possible implementation, H1 and H2 may be obtained by performing sub-block interleaving on an encoded bit sequence of the polar code based on a first length. For example, the transmit end may number the encoded bit sequence of the polar code 0 to *N*₂ - 1, and the transmit end may perform sub-block interleaving on 0 to *N*₂ - 1. A second half of a result of the sub-block interleaving and a first half of the result of the sub-block interleaving correspond to subcodes included in H1 and subcodes included in H2 respectively. Optionally, a current NR sequence may be reused as the interleaved sequence. In other words, for a sub-block interleaving manner, refer to a sub-block interleaving manner in NR. For example, assuming that *N*₂=32, a sub-block interleaved sequence is [0 1 2 4 3 5 6 7 8 16 9 17 10 18 11 19 12 20 13 21 14 22 15 23 24 25 26 28 27 29 30 31]. Sub-blocks [12 20 13 21 14 22 15 23 24 25 26 28 27 29 30 31] correspond to the subcodes included in H1, and sub-blocks [0 1 2 4 3 5 6 7 8 16 9 17 10 18 11 19] corresponds to the subcodes included in H2. In other words, H1 includes subcodes corresponding to [12 20 13 21 14 22 15 23 24 25 26 28 27 29 30 31] in the encoded bit sequence, and H2 includes subcodes corresponding to [0 1 2 4 3 5 6 7 8 16 9 17 10 18 11 19] in the encoded bit sequence of the polar code.

Optionally, the first length may be a length of the encoded bit sequence of the polar code, or may be a sum of a length of the second encoded bit sequence of initial transmission and a length of the first encoded bit sequence of retransmission, or may be twice a length of the second encoded bit sequence of initial transmission, or may be twice a length of the first encoded bit sequence of retransmission.

It should be noted that, neither H1 nor H2 is necessarily sent entirely, and H1 and H2 may be sent in a plurality of transmissions, thereby improving flexibility. For example, if sending is performed in two transmissions, H1 may be sent in the 1^{st} transmission, and H2 may be sent in the 2^{nd} transmission. For another example, if sending is performed in a plurality of transmissions, a part of H1 may be sent in the 1^{st} transmission, and then a remaining part of H1 and H2 are sent in a plurality of transmissions.

Based on the foregoing solution, the transmit end determines H1 for initial transmission and H2 for retransmission, where H1 includes a part of the U code and a part of the V code, and H2 also includes a part of the U code and a part of the V code. Because the sub-block interleaving operation is not restricted by the mother code length, encoding flexibility is improved.

In another possible implementation, H1 may include a part of the first subcode of the polar code and a part of the second subcode of the polar code. Optionally, the first subcode may be a U code of the polar code, and the second subcode may be a V code of the polar code; or the first subcode may be a V code of the polar code, and the second subcode may be a U code of the polar code. In other words, H1 may include a part of the U code and a part of the V code, and similarly, H2 may include a part of the first subcode of the polar code and a part of the second subcode of the polar code. In other words, H2 may include a part of the U code and a part of the V code. It may be understood that subcodes included in H2 may be implemented with reference to subcodes included in H1.

In a possible case, the V code may be numbered in a natural order, that is, the V code includes 0, 1, 2, 3, 4, 5, 6, and 7; and the U code may be numbered in a natural order, that is, the U code includes 0, 1, 2, 3, 4, 5, 6, and 7. In this case, H1 may include last X1 subcodes of the V code and last X2 subcodes of the U code. For another example, H1 may include last X1 subcodes of the bit-reversed V code and last X2 subcodes of the bit-reversed U code. X1 and X2 are both positive integers.

It should be noted that bit reversal refers to performing binary expansion on numbers and then reversing bits to obtain an order. For example, numbers with a length of 8 are 0 to 7, and a binary expansion thereof is [000, 001, 010, 011, 100, 101, 110, 111]. After bit reversal, the numbers are [000, 100, 010, 110, 001, 101, 011, 111], namely, [0, 4, 2, 6, 1, 5, 3, 7]. In this case, the numbers from back to front are [7, 3, 5, 1, 6, 2, 4, 0].

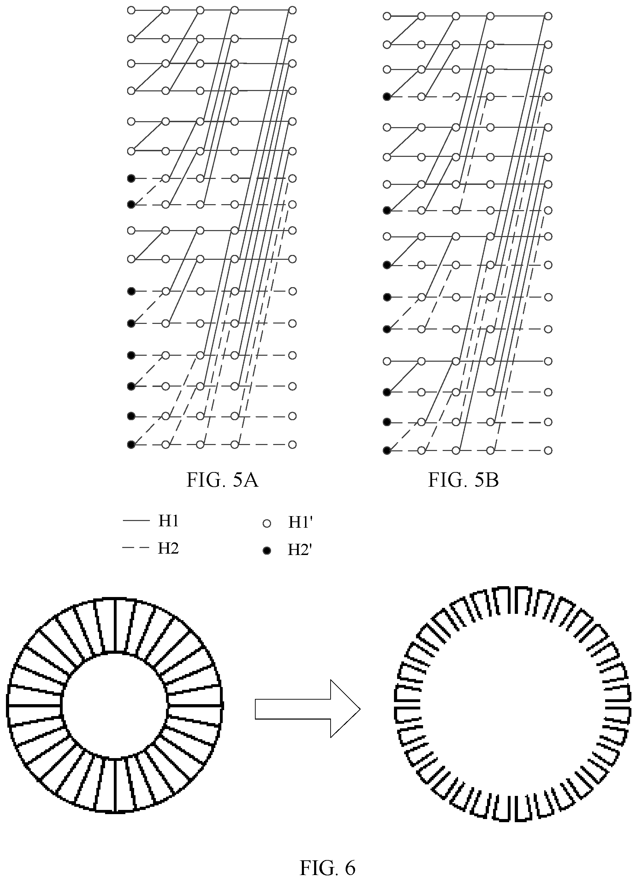

Based on the foregoing content, with reference to FIG. 5A and FIG. 5B, for example, the length of the encoded bit sequence is 16, and the length of H1 is 8. It is assumed that H1 includes last six subcodes of the U code and last two subcodes of the V code. Eight subcodes of the U code are numbered 0 to 7 in the natural order, and eight subcodes of the V code are numbered 0 to 7 in the natural order. In this case, H1 may include eight subcodes shown in FIG. 5A. It is assumed that H1 includes last two subcodes of the bit-reversed V code and last six subcodes of the bit-reversed U code. In this case, a sequence of the bit-reversed V code is [000, 100, 010, 110, 001, 101, 011, 111], a sequence of the bit-reversed U code is [000, 100, 010, 110, 001, 101, 011, 111], and H1 may include eight subcodes shown in FIG. 5B.

Optionally, H2 may include a remaining part of subcodes of the V code excluding a subcode included in H1, and include a remaining part of subcodes of the U code excluding a subcode included in H1. For example, the length of the encoded bit sequence is 16, and the lengths of H1 and H2 are both 8. With reference to FIG. 5A and FIG. 5B, H2 may include eight subcodes shown in FIG. 5A or eight subcodes shown in FIG. 5B. Alternatively, H2 and H1 may overlap. In other words, the subcodes included in H2 include a part of the subcodes included in H1.

Based on the foregoing solution, the transmit end determines H1 used for initial transmission and H2 used for retransmission, where H1 includes a part of the U code and a part of the V code, and H2 also includes a part of the U code and a part of the V code. The following describes a manner in which the transmit end determines a rate matching position, a copy bit subchannel, a copied bit subchannel, and a correspondence. For ease of description, bit subchannels corresponding to the subcodes included in H1 are referred to as H1', and bit subchannels corresponding to the subcodes included in H2 are referred to as H2', as shown in FIG. 5A and FIG. 5B.

In a possible implementation, if the rate matching manner is repetition or puncturing, the transmit end may use a rate matching position in NR. For example, a quantity of rate matching positions is denoted as L, where L=|E-*N*₁|. For example, if the rate matching manner is puncturing, L positions are selected from a position sequence corresponding to H1 (H2) from front to back for puncturing. For example, if the rate matching manner is repetition, L positions are selected from a position sequence corresponding to H1 (H2) from back to front for repetition.

In another possible implementation, if the rate matching manner is shortening, the transmit end may shorten each sub-block included in H1 (H2). With reference to FIG. 6, an example in which a rate matching position for H1 is determined is used for description. The transmit end may select a same rate matching position, namely, a same to-be-shortened position, for each sub-block corresponding to H1. For example, the transmit end selects O positions from back to front in a natural order of bits in the sub-block, where O is a positive integer. For another example, the transmit end may select O positions from back to front after bit reversal of bits in the sub-block. For another example, the transmit end may select O positions from back to front in a fixed order of bits in the sub-block.

Optionally, if the rate matching manner is shortening, the transmit end may set a rate matching position for H1 (H2), namely, a to-be-shortened position, as a frozen position; or if the rate matching manner is puncturing, the transmit end may set a rate matching position for H1, namely, a to-be-punctured position, as a frozen position.

Based on the foregoing possible implementations, the transmit end may determine the rate matching position. The following describes a manner in which the transmit end determines a copy bit subchannel, a copied bit subchannel, and a correspondence.

In a possible implementation, the transmit end may determine the copy bit subchannel, the copied bit subchannel, and the correspondence based on a polar code sequence with a length of N₂ and a polar code sequence with a length of N₁. For example, the transmit end may select K bit subchannels from information bit subchannels of the polar code sequence with a length of N₂ as an information bit subchannel set ${\overline{Q}}_{{I}_{2}}^{{N}_{2}}$, and the transmit end may select K bit subchannels from information bit subchannels of the polar code sequence with a length of N₁ as an information bit subchannel set ${\overline{Q}}_{{I}_{1}}^{{N}_{1}}$. The transmit end may determine the copy bit subchannel and the copied bit subchannel based on the information bit subchannel set ${\overline{Q}}_{{I}_{2}}^{{N}_{2}}$ and the information bit subchannel set ${\overline{Q}}_{{I}_{1}}^{{N}_{1}}$.

Optionally, the K bit subchannels may be K bit subchannels with high reliability. For example, the transmit end may sort reliability of the information bit subchannels of the polar code sequence with a length of N₂, and select first K bit subchannels in descending order of reliability or select last K bit subchannels in ascending order of reliability, as the information bit subchannel set ${\overline{Q}}_{{I}_{2}}^{{N}_{2}}$. Similarly, the transmit end may sort reliability of the information bit subchannels of the polar code sequence with a length of N₁, and select first K bit subchannels in descending order of reliability or select last K bit subchannels in ascending order of reliability, as the information bit subchannel set ${\overline{Q}}_{{I}_{1}}^{{N}_{1}}$. It may be understood that K is a positive integer.

For another example, the transmit end may select K bit subchannels based on the polar code sequence with a length of N₂ as a set Q̅^{N₂}, and the transmit end may select K bit subchannels based on the polar code sequence with a length of N₁ as a set Q̅^{N₁}. The transmit end may determine the copy bit subchannel and the copied bit subchannel based on the set Q̅^{N₂} and the set Q̅^{N₁}. Optionally, the K bit subchannels may be K bit subchannels with high reliability. Repeated parts are not described again.

It may be understood that, when selecting K positions, the transmit end may not select a bit subchannel that may be set to a frozen position. In other words, the transmit end may select K positions from sequences other than a pre-frozen position in the polar code sequence with a length of N₂. Similarly, the transmit end may select K positions from sequences other than a pre-frozen position in the polar code sequence with a length of N₁.

For ease of description, the following provides descriptions by using an example in which the transmit end may determine the copy bit subchannel, the copied bit subchannel, and the correspondence based on the information bit subchannel set ${\overline{Q}}_{{I}_{2}}^{{N}_{2}}$ and the information bit subchannel set ${\overline{Q}}_{{I}_{1}}^{{N}_{1}}$.

In a possible case, a manner of selecting a sub-sequence in the information bit subchannel set ${\overline{Q}}_{{I}_{1}}^{{N}_{1}}$, namely, a copy bit subchannel in the information bit subchannel set ${\overline{Q}}_{{I}_{1}}^{{N}_{1}}$ corresponds to H1. For example, the transmit end may determine ${\overline{Q}}_{cp}^{v}$ and ${\overline{Q}}_{cped}^{v}$ based on the information bit subchannel set ${\overline{Q}}_{{I}_{1}}^{{N}_{1}}$ and the information bit subchannel set ${\overline{Q}}_{{I}_{2}}^{{N}_{2}}$. An element included in ${\overline{Q}}_{cp}^{v}$ is in a one-to-one correspondence with an element included in ${\overline{Q}}_{cped}^{v}$. ${\overline{Q}}_{cp}^{v}$ may be understood as a copy bit subchannel of the V code, ${\overline{Q}}_{cped}^{v}$ may be understood as a copied bit subchannel of the V code, and the copy bit subchannel of the V code is in a one-to-one correspondence with the copied bit subchannel of the V code.

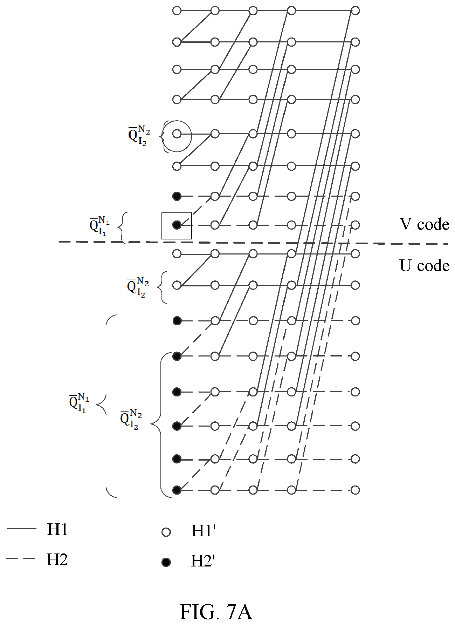

For example, the transmit end may select a subset including an element that is in a difference set between the information bit subchannel set ${\overline{Q}}_{{I}_{1}}^{{N}_{1}}$ and the information bit subchannel set ${\overline{Q}}_{{I}_{2}}^{{N}_{2}}$ and that corresponds to the first subcode, and denote the subset as ${\overline{Q}}_{{I}_{1}}^{V , {N}_{1}}$; and the transmit end may select a subset including an element that is in a difference set between the information bit subchannel set ${\overline{Q}}_{{I}_{2}}^{{N}_{2}}$ and the information bit subchannel set ${\overline{Q}}_{{I}_{1}}^{{N}_{1}}$ and that corresponds to the first subcode, and denote the subset as ${\overline{Q}}_{{I}_{2}}^{V , {N}_{2}}$. With reference to FIG. 7A, the subset ${\overline{Q}}_{{I}_{1}}^{V , {N}_{1}}$ including the element that is in the difference set between the information bit subchannel set ${\overline{Q}}_{{I}_{1}}^{{N}_{1}}$ and the information bit subchannel set ${\overline{Q}}_{{I}_{2}}^{{N}_{2}}$ and that corresponds to the first subcode may be a bit subchannel marked with a rectangle, and the subset ${\overline{Q}}_{{I}_{2}}^{V , {N}_{2}}$ including the element that is in the difference set between the information bit subchannel set ${\overline{Q}}_{{I}_{2}}^{{N}_{2}}$ and the information bit subchannel set ${\overline{Q}}_{{I}_{1}}^{{N}_{1}}$ and that corresponds to the first subcode may be a bit subchannel marked with a circle.

The element that is in the difference set between the information bit subchannel set ${\overline{Q}}_{{I}_{1}}^{{N}_{1}}$ and the information bit subchannel set ${\overline{Q}}_{{I}_{2}}^{{N}_{2}}$ and that corresponds to the first subcode may be understood as an element whose number is less than N₁ in the difference set between the information bit subchannel set ${\overline{Q}}_{{I}_{1}}^{{N}_{1}}$ and the information bit subchannel set ${\overline{Q}}_{{I}_{2}}^{{N}_{2}}$. For example, in FIG. 7A, the information bit subchannel set ${\overline{Q}}_{{I}_{2}}^{{N}_{2}}$ may include a bit subchannel corresponding to a number 4, a bit subchannel corresponding to a number 9, and bit subchannels corresponding to numbers 11 to 15, and the information bit subchannel set ${\overline{Q}}_{{I}_{1}}^{{N}_{1}}$ may include a bit subchannel corresponding to a number 7, a bit subchannel corresponding to a number 10, and the bit subchannels corresponding to the numbers 11 to 15. The difference set between the information bit subchannel set ${\overline{Q}}_{{I}_{1}}^{{N}_{1}}$ and the information bit subchannel set ${\overline{Q}}_{{I}_{2}}^{{N}_{2}}$ includes the bit subchannel corresponding to the number 7 and the bit subchannel corresponding to the number 10. Because N₁ is 8, ${\overline{Q}}_{{I}_{1}}^{V , {N}_{1}}$ includes the bit subchannel corresponding to the number 7. Similarly, the difference set between the information bit subchannel set ${\overline{Q}}_{{I}_{2}}^{{N}_{2}}$ and the information bit subchannel set ${\overline{Q}}_{{I}_{1}}^{{N}_{1}}$ includes the bit subchannel corresponding to the number 4 and the bit subchannel corresponding to the number 9. Because N₁ is 8, ${\overline{Q}}_{{I}_{2}}^{V , {N}_{2}}$ includes the bit subchannel corresponding to the number 4.

The transmit end determines ${\overline{Q}}_{{I}_{1}}^{V , {N}_{1}}$ and ${\overline{Q}}_{{I}_{2}}^{V , {N}_{2}}$ based on ${\overline{Q}}_{cp}^{v}$ and ${\overline{Q}}_{cp ed}^{v}$. For example, the transmit end may denote a bit subchannel that is in ${\overline{Q}}_{{I}_{1}}^{V , {N}_{1}}$ and that corresponds to H1 as ${\overline{Q}}_{cp ed}^{v}$, and denote a bit subchannel that is in ${\overline{Q}}_{{I}_{2}}^{V , {N}_{2}}$ and that corresponds to H2 as ${\overline{Q}}_{cp}^{v}$. Optionally, ${\overline{Q}}_{cp}^{v}$ does not include a bit subchannel that is in ${\overline{Q}}_{{I}_{1}}^{V , {N}_{1}}$ and that corresponds to H2. In other words, the transmit end may denote, as ${\overline{Q}}_{{I}_{2}}^{V , {N}_{2}}$, a bit subchannel in bit subchannels that are in ${\overline{Q}}_{{I}_{1}}^{V , {N}_{1}}$ and that correspond to H2 excluding the bit subchannel that is in ${\overline{Q}}_{cp}^{v}$ and that corresponds to H2. With reference to FIG. 7A, two connected bit subchannels are ${\overline{Q}}_{cp}^{v}$ and ${\overline{Q}}_{cp ed}^{v}$.

Optionally, a quantity of elements included in ${\overline{Q}}_{{I}_{1}}^{V {, N}_{1}}$ is not necessarily completely the same as a quantity of elements included in ${\overline{Q}}_{{I}_{2}}^{V , {N}_{2}}$. In this case, a quantity of "one-to-one correspondences" may be determined based on a set including a smaller quantity of elements. For example, if the quantity of elements included in ${\overline{Q}}_{{I}_{1}}^{V {, N}_{1}}$ is smaller, assuming that the quantity of elements included in ${\overline{Q}}_{{I}_{1}}^{V {, N}_{1}}$ is Z, Z elements with high reliability are selected from ${\overline{Q}}_{{I}_{2}}^{V , {N}_{2}}$ as a bit subchannel set in a "one-to-one correspondence" with the elements included in ${\overline{Q}}_{{I}_{1}}^{V {, N}_{1}}$. Conversely, if the quantity of elements included in ${\overline{Q}}_{{I}_{2}}^{V , {N}_{2}}$ is smaller, assuming that the quantity of elements included in ${\overline{Q}}_{{I}_{2}}^{V , {N}_{2}}$ is Z, Z elements with low reliability are selected from ${\overline{Q}}_{{I}_{1}}^{V {, N}_{1}}$ as a bit subchannel set in a "one-to-one correspondence" with the elements included in ${\overline{Q}}_{{I}_{2}}^{V , {N}_{2}}$.

Based on the foregoing solution, H1 includes the copied bit subchannel ${\overline{Q}}_{cp ed}^{v}$ of the V code, H2 includes the copy bit subchannel ${\overline{Q}}_{cp}^{v}$ of the V code, and an element included in ${\overline{Q}}_{cp}^{v}$ is in a one-to-one correspondence with an element included in ${\overline{Q}}_{cped}^{v}$. Therefore, there is a correspondence between a part of bit subchannels of the V code that are included in H1 and a part of bit subchannels of the V code that are included in H2.

In a possible case, a quantity of elements included in ${\overline{Q}}_{cp}^{v}$ may be different from a quantity of elements included in ${\overline{Q}}_{cp ed}^{v}$. In this case, the transmit end may determine a subset of ${\overline{Q}}_{cp}^{v}$ and a subset of ${\overline{Q}}_{cp ed}^{v}$. An element included in the subset of ${\overline{Q}}_{cp}^{v}$ is in a one-to-one correspondence with an element included in the subset of ${\overline{Q}}_{cp ed}^{v}$.

In another possible implementation, the transmit end may determine ${\overline{Q}}_{cp}^{u}$ and ${\overline{Q}}_{cped}^{u}$ based on the information bit subchannel set ${\overline{Q}}_{{I}_{1}}^{{N}_{1}}$ and the information bit subchannel set ${\overline{Q}}_{{I}_{2}}^{{N}_{2}}$. An element included in ${\overline{Q}}_{cp}^{u}$ is in a one-to-one correspondence with an element included in ${\overline{Q}}_{cped}^{u}$. ${\overline{Q}}_{cp}^{u}$ may be understood as a copy bit subchannel of the U code, ${\overline{Q}}_{cped}^{u}$ may be understood as a copied bit subchannel of the U code, and the copy bit subchannel of the U code may be in a one-to-one correspondence with the copied bit subchannel of the U code.

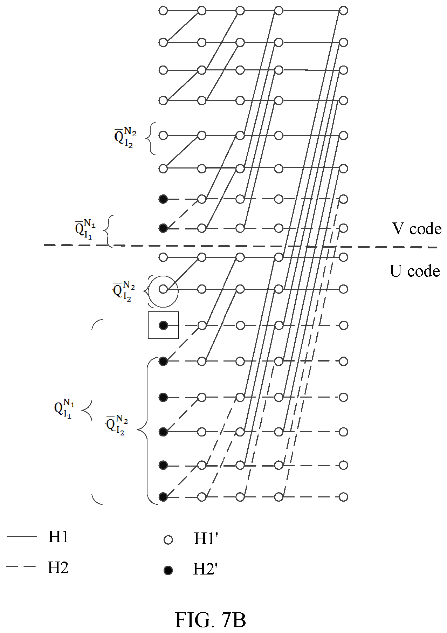

For example, the transmit end may select a subset including an element that is in a difference set between the information bit subchannel set ${\overline{Q}}_{{I}_{1}}^{{N}_{1}}$ and the information bit subchannel set ${\overline{Q}}_{{I}_{2}}^{{N}_{2}}$ and that corresponds to the second subcode, and denote the subset as ${\overline{Q}}_{{I}_{1}}^{U , {N}_{1}}$; and the transmit end may select a subset including an element that is in a difference set between the information bit subchannel set ${\overline{Q}}_{{I}_{2}}^{{N}_{2}}$ and the information bit subchannel set ${\overline{Q}}_{{I}_{1}}^{{N}_{1}}$ and that corresponds to the second subcode, and denote the subset as ${\overline{Q}}_{{I}_{2}}^{U , {N}_{2}}$. With reference to FIG. 7B, the subset ${\overline{Q}}_{{I}_{1}}^{U , {N}_{1}}$ including the element that is in the difference set between the information bit subchannel set ${\overline{Q}}_{{I}_{1}}^{{N}_{1}}$ and the information bit subchannel set ${\overline{Q}}_{{I}_{2}}^{{N}_{2}}$ and that corresponds to the second subcode may be a bit subchannel marked with a rectangle, and the subset ${\overline{Q}}_{{I}_{2}}^{U , {N}_{2}}$ including the element that is in the information bit subchannel set ${\overline{Q}}_{{I}_{2}}^{{N}_{2}}$ and the information bit subchannel set ${\overline{Q}}_{{I}_{1}}^{{N}_{1}}$ and that corresponds to the second subcode may be a bit subchannel marked with a circle.

The element that is in the difference set between the information bit subchannel set ${\overline{Q}}_{{I}_{1}}^{{N}_{1}}$ and the information bit subchannel set ${\overline{Q}}_{{I}_{2}}^{{N}_{2}}$ and that corresponds to the second subcode may be understood as an element whose number is greater than or equal to N₁ in the difference set between the information bit subchannel set ${\overline{Q}}_{{I}_{1}}^{{N}_{1}}$ and the information bit subchannel set ${\overline{Q}}_{{I}_{2}}^{{N}_{2}}$. For example, in FIG. 7B, the information bit subchannel set ${\overline{Q}}_{{I}_{2}}^{{N}_{2}}$ may include a bit subchannel corresponding to a number 4, a bit subchannel corresponding to a number 9, and bit subchannels corresponding to numbers 11 to 15, and the information bit subchannel set ${\overline{Q}}_{{I}_{2}}^{{N}_{2}}$ may include a bit subchannel corresponding to a number 7, a bit subchannel corresponding to a number 10, and the bit subchannels corresponding to the numbers 11 to 15. The difference set between the information bit subchannel set ${\overline{Q}}_{{I}_{1}}^{{N}_{1}}$ and the information bit subchannel set ${\overline{Q}}_{{I}_{2}}^{{N}_{2}}$ includes the bit subchannel corresponding to the number 4 and the bit subchannel corresponding to the number 9. Because N₁ is 8, ${\overline{Q}}_{{I}_{2}}^{U , {N}_{2}}$ includes the bit subchannel corresponding to the number 9. Similarly, the difference set between the information bit subchannel set ${\overline{Q}}_{{I}_{2}}^{{N}_{2}}$ and the information bit subchannel set ${\overline{Q}}_{{I}_{1}}^{{N}_{1}}$ includes the bit subchannel corresponding to the number 7 and the bit subchannel corresponding to the number 10. Because N₁ is 8, ${\overline{Q}}_{{I}_{1}}^{U , {N}_{1}}$ includes the bit subchannel corresponding to the number 10.

The transmit end may determine ${\overline{Q}}_{cp}^{u}$ and ${\overline{Q}}_{cp ed}^{u}$ based on ${\overline{Q}}_{{I}_{2}}^{U , {N}_{2}}$ and ${\overline{Q}}_{{I}_{2}}^{U , {N}_{2}}$. For example, the transmit end may denote a bit subchannel that is in ${\overline{Q}}_{{I}_{1}}^{U , {N}_{1}}$ and that corresponds to H1 as ${\overline{Q}}_{cp ed}^{u}$, and denote a bit subchannel that is in ${\overline{Q}}_{{I}_{2}}^{U , {N}_{2}}$ and that corresponds to H2 as ${\overline{Q}}_{cp ed}^{u}$. Optionally, ${\overline{Q}}_{cp ed}^{u}$ does not include a bit subchannel that is in ${\overline{Q}}_{{I}_{1}}^{U , {N}_{1}}$ and that corresponds to H2. In other words, the transmit end may denote, as ${\overline{Q}}_{cp ed}^{u}$, a bit subchannel in bit subchannels that are in ${\overline{Q}}_{{I}_{2}}^{U , {N}_{2}}$ and that correspond to H2 excluding the bit subchannel that is in ${\overline{Q}}_{{I}_{1}}^{U , {N}_{1}}$ and that corresponds to H2. With reference to FIG. 7B, two connected bit subchannels are ${\overline{Q}}_{cp}^{u}$ and ${\overline{Q}}_{cp ed}^{u}$.

Optionally, a quantity of elements included in ${\overline{Q}}_{{I}_{1}}^{U , {N}_{1}}$ is not necessarily completely the same as a quantity of elements included in ${\overline{Q}}_{{I}_{2}}^{U , {N}_{2}}$. In this case, a quantity of "one-to-one correspondences" may be determined based on a set including a smaller quantity of elements. For example, if the quantity of elements included in ${\overline{Q}}_{{I}_{1}}^{U , {N}_{1}}$ is smaller, assuming that the quantity of elements included in ${\overline{Q}}_{{I}_{1}}^{U , {N}_{1}}$ is Z, Z elements with high reliability are selected from ${\overline{Q}}_{{I}_{2}}^{U , {N}_{2}}$ as a bit subchannel set in a "one-to-one correspondence" with the elements included in ${\overline{Q}}_{{I}_{1}}^{U , {N}_{1}}$. Conversely, if the quantity of elements included in ${\overline{Q}}_{{I}_{2}}^{U , {N}_{2}}$ is smaller, assuming that the quantity of elements included in ${\overline{Q}}_{{I}_{2}}^{U , {N}_{2}}$ is Z, Z elements with low reliability are selected from ${\overline{Q}}_{{I}_{1}}^{U , {N}_{1}}$ as a bit subchannel set in a "one-to-one correspondence" with the elements included in ${\overline{Q}}_{{I}_{2}}^{U , {N}_{2}}$.

Based on the foregoing solution, H1 includes the copied bit subchannel ${\overline{Q}}_{cp ed}^{u}$ of the U code, H2 includes the copy bit subchannel ${\overline{Q}}_{cp}^{u}$ of the U code, and an element included in ${\overline{Q}}_{cp}^{u}$ is in a one-to-one correspondence with an element included in ${\overline{Q}}_{cped}^{u}$. Therefore, there is a correspondence between a part of bit subchannels of the U code that are included in H1 and a part of bit subchannels of the U code that are included in H2.

In a possible case, the quantity of elements included in ${\overline{Q}}_{cp}^{u}$ may be different from the quantity of elements included in ${\overline{Q}}_{cp ed}^{u}$, which may be implemented with reference to the case in which the quantity of elements included may be different from the quantity of elements included in ${\overline{Q}}_{cp ed}^{v}$. Details are not described herein again.

In a possible case, a one-to-one correspondence may be formed between ${\overline{Q}}_{cp}^{u}$ and ${\overline{Q}}_{cp ed}^{u}$ after interleaving. This is not specifically limited in this application. For example, the transmit end may perform sub-block interleaving on ${\overline{Q}}_{cp}^{u}$. For a sub-block interleaving manner, refer to a sub-block interleaving manner in NR. Sub-block interleaved ${\overline{Q}}_{cp}^{u}$ may be in a one-to-one correspondence with ${\overline{Q}}_{cp ed}^{u}$. It may be understood that ${\overline{Q}}_{cp}^{u}$ in the one-to-one correspondence with the interleaved ${\overline{Q}}_{cp ed}^{u}$ may be non-interleaved or interleaved. This is not specifically limited in this application. Similarly, a one-to-one correspondence may also be formed between ${\overline{Q}}_{cp}^{v}$ and ${\overline{Q}}_{cp ed}^{v}$ after bit interleaving or sub-block interleaving, which may be implemented with reference to the one-to-one correspondence being formed between ${\overline{Q}}_{cp}^{u}$ and ${\overline{Q}}_{cp ed}^{u}$ after interleaving. This is not specifically limited in this application.

Based on the foregoing solution, H1 includes the copied bit subchannel ${\overline{Q}}_{cp ed}^{u}$ of the U code, H2 includes the copy bit subchannel ${\overline{Q}}_{cp}^{u}$ of the U code, and an element included in ${\overline{Q}}_{cp}^{u}$ is in a one-to-one correspondence with an element included in ${\overline{Q}}_{cped}^{u}$. Therefore, there is a correspondence between a part of bit subchannels of the U code that are included in H1 and a part of bit subchannels of the U code that are included in H2. It should be noted that, in this embodiment of this application, across H1 and H2, there is a correspondence between bit channels of the V code and a correspondence between bit channels of the U code, and there may also be a correspondence between a bit subchannel of the U code and a bit subchannel of the V code, which may be implemented with reference to FIG. 3.

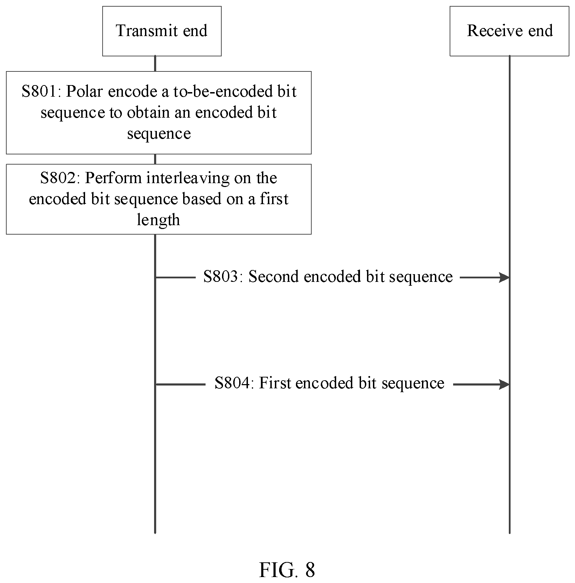

Based on the foregoing content, the transmit end constructs H1 for initial transmission and H2 for retransmission. The transmit end may perform polar encoding based on the foregoing H1 and H2, to obtain an encoded bit sequence. FIG. 8 is an example flowchart of a data transmission method according to an embodiment of this application. The following steps may be included.

S801: The transmit end polar encodes a to-be-encoded bit sequence to obtain an encoded bit sequence.

The transmit end may construct a vector *U*₂ with a length of *N*₂, where 0 is placed at a frozen position, an information bit is placed on an information bit subchannel, and same information bits are placed on information bit subchannels of the vector *U*₂ that are in a one-to-one correspondence. The transmit end may polar encode the vector *U*₂ to obtain an encoded bit sequence. For example, the transmit end may multiply the vector *U*₂ by a polar encoding matrix to obtain an encoded bit sequence X2. The encoded bit sequence X2 may include a second encoded bit sequence for initial transmission and a first encoded bit sequence for retransmission.

S802: The transmit end performs interleaving on the encoded bit sequence based on a first length.

In a possible case, the transmit end may perform sub-block interleaving on the encoded bit sequence based on a first length. For a manner in which the transmit end performs sub-block interleaving on the encoded bit sequence, refer to the foregoing manner in which the transmit end performs sub-block interleaving on the sub-blocks of the polar code. For example, the transmit end may perform sub-block interleaving on the encoded bit sequence X2 in S801 based on the first length, to obtain an encoded bit sequence X3. A current NR sequence may be reused as a similar interleaved sequence. The transmit end may select a sub-block corresponding to H2' as the second encoded bit sequence, and select a sub-block corresponding to H1' as the first encoded bit sequence.

S803: The transmit end sends the second encoded bit sequence to the receive end.

Correspondingly, the receive end receives the second encoded bit sequence from the transmit end.

n a possible case, the transmit end may perform rate matching on the second encoded bit sequence in the result of the interleaving in S802. For example, the transmit end may perform rate matching on the second encoded bit sequence in the determined rate matching manner. For example, if the rate matching manner is puncturing, L bits from front to back in the second encoded bit sequence may be punctured. For another example, if the rate matching manner is repetition, the transmit end may repeat L bits from back to front in the second encoded bit sequence. For another example, if the rate matching manner is shortening, the transmit end may select O positions for each sub-block of the second encoded bit sequence for shortening.

The transmit end may perform operations such as modulation and mapping on the rate-matched second encoded bit sequence to obtain a to-be-sent signal, and send the to-be-sent signal to the receive end. The receive end may perform operations such as demodulation and de-mapping on the received signal to obtain a symbol sequence corresponding to the second encoded bit sequence. The receive end may perform deinterleaving on and decode the symbol sequence to obtain an information bit. In other words, the receive end may perform, on the symbol sequence, operations inverse to the operations of the transmit end to obtain the information bit.

It may be understood that in S803, the symbol sequence obtained by the receive end may correspond to a part of the second encoded bit sequence. That is, the transmit end has not sent the entire second encoded bit sequence. In this case, the receive end needs to set a symbol corresponding to a bit sequence that has not been sent to 0. The transmit end may perform deinterleaving on and decode a padded symbol sequence to obtain the information bit.

S804: The transmit end sends the first encoded bit sequence to the receive end.

Correspondingly, the receive end receives the first encoded bit sequence from the transmit end.

For example, when the receive end does not successfully decode the second encoded bit sequence, the receive end may feed back a NACK to the transmit end. In this case, the transmit end may determine that data needs to be retransmitted. In a possible case, the transmit end may perform rate matching on the first encoded bit sequence included in the result of the interleaving in S802. For example, if the rate matching manner is shortening, the transmit end may select O positions for each sub-block of the first encoded bit sequence for shortening.

In a possible case, if the rate matching manner used for the second encoded bit sequence during initial transmission is puncturing, during retransmission, that is, in S804, the transmit end may send an encoded bit sequence corresponding to a punctured position in the second encoded bit sequence, and then continue to send the first encoded bit sequence. If the rate matching manner used for the second encoded bit sequence during initial transmission is repetition, the transmit end may directly send the first encoded bit sequence during retransmission.

The transmit end may perform operations such as modulation and mapping on the rate-matched first encoded bit sequence to obtain a to-be-sent signal, and send the to-be-sent signal to the receive end. The receive end may perform operations such as demodulation and de-mapping on the received signal to obtain a symbol sequence corresponding to the first encoded bit sequence. The receive end may perform deinterleaving on and decode the symbol sequence to obtain an information bit.

It may be understood that in S803, the symbol sequence obtained by the receive end may correspond to a part of the first encoded bit sequence. That is, the transmit end has not sent the entire first encoded bit sequence. In this case, the receive end needs to set a symbol corresponding to a bit sequence that has not been sent to 0. The transmit end may perform deinterleaving on and decode a padded symbol sequence to obtain the information bit.

In this embodiment of this application, the transmit end may place the first encoded bit sequence and the second encoded bit sequence, namely, the foregoing encoded bit sequence X3, into a circular buffer (circular buffer) for sending. It may be understood that, if the rate matching manner is puncturing or repetition, the transmit end may place the result of the interleaving, namely, the encoded bit sequence X3, into the cyclic buffer. Optionally, if the rate matching manner is puncturing, the transmit end may perform sub-block interleaving on the encoded bit sequence X3, and place the sub-block interleaved encoded bit sequence X3 into the cyclic buffer. For a sub-block interleaving manner, refer to the foregoing sub-block interleaving manner in NR.

If the rate matching manner is shortening, the transmit end may place a result of the rate matching, namely, a shortened encoded bit sequence X4, into the cyclic buffer. Alternatively, if the rate matching manner is shortening, the transmit end may place the encoded bit sequence X3, into the cyclic buffer. Alternatively, the transmit end may perform sub-block interleaving on the encoded bit sequence X3, and place the sub-block interleaved encoded bit sequence X3 into the cyclic buffer. For a sub-block interleaving manner, refer to the foregoing sub-block interleaving manner in NR.

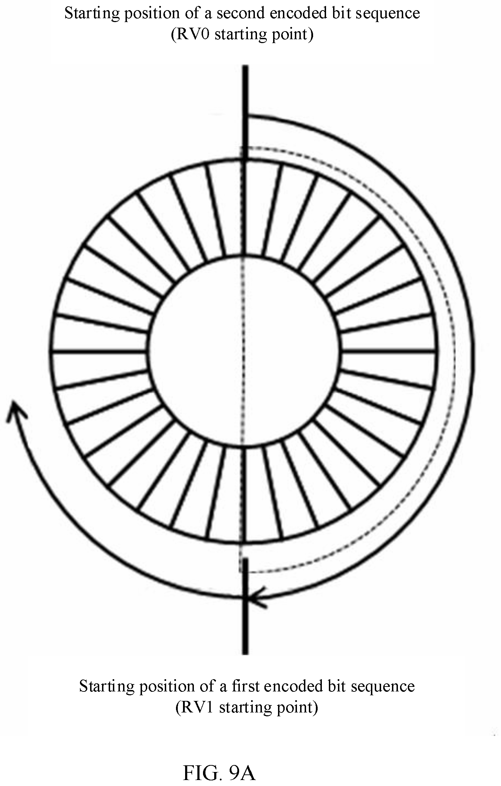

With reference to FIG. 9A, when the rate matching manner is repetition or shortening, a starting position of the first encoded bit sequence may be half of a length of the cyclic buffer. That is, in initial data transmission, the transmit end may send a bit sequence of half the length, starting from a starting position of the circular buffer, as the second encoded bit sequence. When the rate matching length is repetition, the transmit end may further repeat transmission of L bits based on the determined rate matching position after sending the bit sequence of half the length. When the rate matching manner is shortening, the encoded bit sequence placed in the circular buffer is a shortened encoded bit sequence, or may be an encoded bit sequence that is not shortened and that has undergone sub-block interleaving.

During data retransmission, the transmitter may send a remaining encoded bit sequence, using a half-length position of the circular buffer as a starting position.

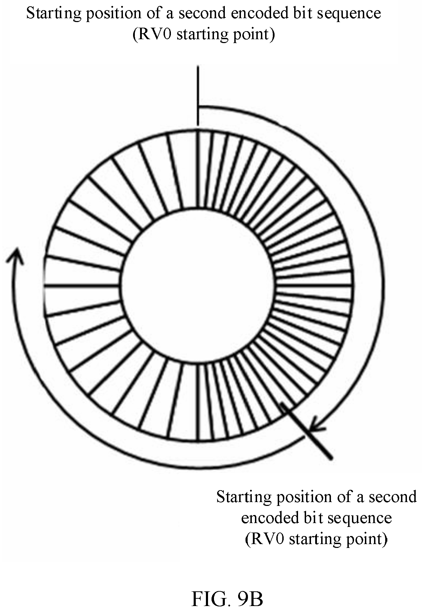

With reference to FIG. 9B, when the rate matching manner is puncturing, a starting position of the first encoded bit sequence is determined by the length of the second encoded bit sequence. In other words, in initial data transmission, the transmit end may send E1 bits, starting from the starting position of the circular buffer, as the second encoded bit sequence for initial transmission, and a remaining second encoded bit sequence that has not been sent may be considered as an encoded bit sequence corresponding to a punctured position. During data retransmission, the transmit end may send the second encoded bit sequence that has not been sent, namely, the encoded bit sequence corresponding to the punctured position in the second encoded bit sequence, and continue to send a remaining encoded bit sequence, namely, the first encoded bit sequence. It may be understood that the first encoded bit sequence may not be entirely sent, or may be entirely sent. If the first encoded bit sequence is not entirely sent, it may be considered that a remaining first encoded bit sequence that has not been sent is an encoded bit sequence corresponding to a punctured position.

It should be noted that, in the foregoing example, an example in which a bit 0 is used as a starting position is used for description. In actual transmission, a bit 1 may alternatively be used as a starting position. This is not specifically limited in this application. In addition, in FIG. 9A and FIG. 9B, the encoded bit sequence may be stored in the circular buffer in a counterclockwise direction, and the encoded bit sequence may be read and sent in a clockwise direction. In other words, during sending of the encoded bit sequence, the encoded bit sequence may be read and sent from a last sequence in the encoded bit sequence.

In this embodiment of this application, the second encoded bit sequence includes a first encoded bit set and a second encoded bit set. The first encoded bit set may correspond to a first subcode of a polar code, and the second encoded bit set may correspond to a second subcode of the polar code. For example, the first encoded bit set may correspond to a U code of the polar code, and the second encoded bit set may correspond to a V code of the polar code. Similarly, the first encoded bit sequence may include a third encoded bit set and a fourth encoded bit set. The third encoded bit set may correspond to the first subcode of the polar code, and the fourth encoded bit set may correspond to the second subcode of the polar code. For example, the third encoded bit set may correspond to the U code of the polar code, and the fourth encoded bit set may correspond to the V code of the polar code.

It may be understood that, the first encoded bit set and the second encoded bit set included in the second encoded bit sequence may be implemented with reference to the first subcode and the second subcode included in H1, and similarly, the third encoded bit set and the fourth encoded bit set included in the first encoded bit sequence may be implemented with reference to the first subcode and the second subcode included in H2.

In a possible case, the second encoded bit sequence may further include a fifth encoded bit set, and the first encoded bit sequence may include a sixth encoded bit set. There is a one-to-one correspondence between the fifth encoded bit set and the sixth encoded bit set. In other words, bits at bit positions that are in a one-to-one correspondence in the fifth encoded bit set and the sixth encoded bit set are the same. It may be understood that, the fifth encoded bit set may correspond to the second subcode, for example, the V code, and similarly, the sixth encoded bit set may correspond to the second subcode, for example, the V code. In other words, there is a one-to-one correspondence between some bits of the V code that are included in the first encoded bit sequence and some bits of the V code that are included in the second encoded bit sequence.

It may be understood that, a bit position corresponding to the fifth encoded bit set included in the second encoded bit sequence may be implemented with reference to ${\overline{Q}}_{cp ed}^{v}$ included in H1', and a bit position corresponding to the encoded bit set included in the first encoded bit sequence may be implemented with reference to ${\overline{Q}}_{cp}^{v}$ included in H2'. Details are not described herein again.

In another possible case, the second encoded bit sequence may include a ninth encoded bit set, and the first encoded bit sequence may further include a tenth encoded bit set. There is a one-to-one correspondence between the ninth encoded bit set and the tenth encoded bit set. In other words, bits at bit positions that are in a one-to-one correspondence in the ninth encoded bit set and the tenth encoded bit set are the same. It may be understood that, the ninth encoded bit set may correspond to the first subcode, for example, the U code, and similarly, the tenth encoded bit set may correspond to the first subcode, for example, the U code. In other words, there is a one-to-one correspondence between some bits of the U code that are included in the first encoded bit sequence and some bits of the U code that are included in the second encoded bit sequence.

It may be understood that, a bit position corresponding to the ninth encoded bit set included in the second encoded bit sequence may be implemented with reference to ${\overline{Q}}_{cp ed}^{u}$ included in H1', and a bit position corresponding to the tenth encoded bit set included in the first encoded bit sequence may be implemented with reference to ${\overline{Q}}_{cp}^{u}$ included in H2'. Details are not described herein again.

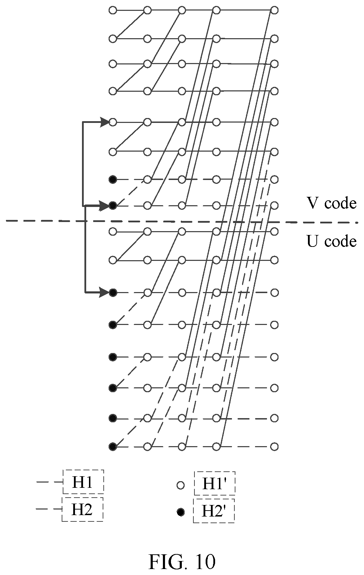

FIG. 10 shows a first encoded bit sequence and a second encoded bit sequence. It can be learned from FIG. 10 that, the first encoded bit sequence includes a part of a U code and a part of a V code, and similarly, the second encoded bit sequence includes a part of the U code and a part of the V code. In addition, there is a one-to-one correspondence between some bits of the U code that are included in the first encoded bit sequence and some bits of the U code that are included in the second encoded bit sequence, and similarly, there is a one-to-one correspondence between some bits of the V code that are included in the first encoded bit sequence and some bits of the V code that are included in the second encoded bit sequence. Two connected circles in FIG. 10 may be considered as bit pairs in a one-to-one correspondence.

It should be noted that, in this embodiment of this application, across the encoded bit sequences, there is a correspondence between copy bits of the V code and a correspondence between copy bits of the U code as shown in FIG. 10, and there may also be a correspondence between a copy bit of the U code and a copy bit of the V code, which may be implemented with reference to FIG. 3.

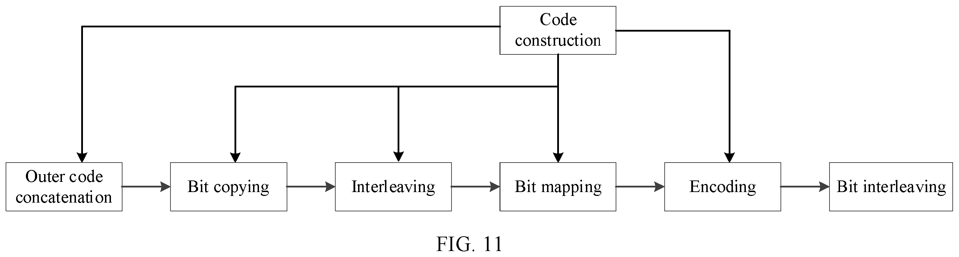

The following describes a polar encoding procedure according to an embodiment of this application with reference to FIG. 11. FIG. 11 shows a polar encoding procedure. First, during polar encoding, the transmit end may perform code construction, for example, construct H1 and H2, and construct to-be-encoded bit sequences H1' and H2'. Then, the transmit end may perform outer code concatenation. The transmit end may perform bit replication and bit copying on bits in a one-to-one correspondence. Specifically, the transmit end may determine the bits in the one-to-one correspondence in the foregoing manner of determining ${\overline{Q}}_{cp}^{v} , { \overline{Q}}_{cped}^{v}$, and ${\overline{Q}}_{cp}^{u}$ and ${\overline{Q}}_{cped}^{u}$, and perform bit replication and bit copying. The transmit end may perform interleaving on the to-be-encoded bit sequences. The transmit end may perform bit mapping, that is, map the to-be-encoded bit sequences to subchannels, and polar encode the to-be-encoded bit sequences.

In the embodiment shown in FIG. 11, a first encoded bit sequence and a second encoded bit sequence may be obtained at a same time. In other words, the transmit end polar encodes an information bit sequence to obtain an encoded bit sequence, where the encoded bit sequence may include the first encoded bit sequence and the second encoded bit sequence. The transmit end may determine, according to a requirement, whether to transmit the first encoded bit sequence and the second encoded bit sequence.

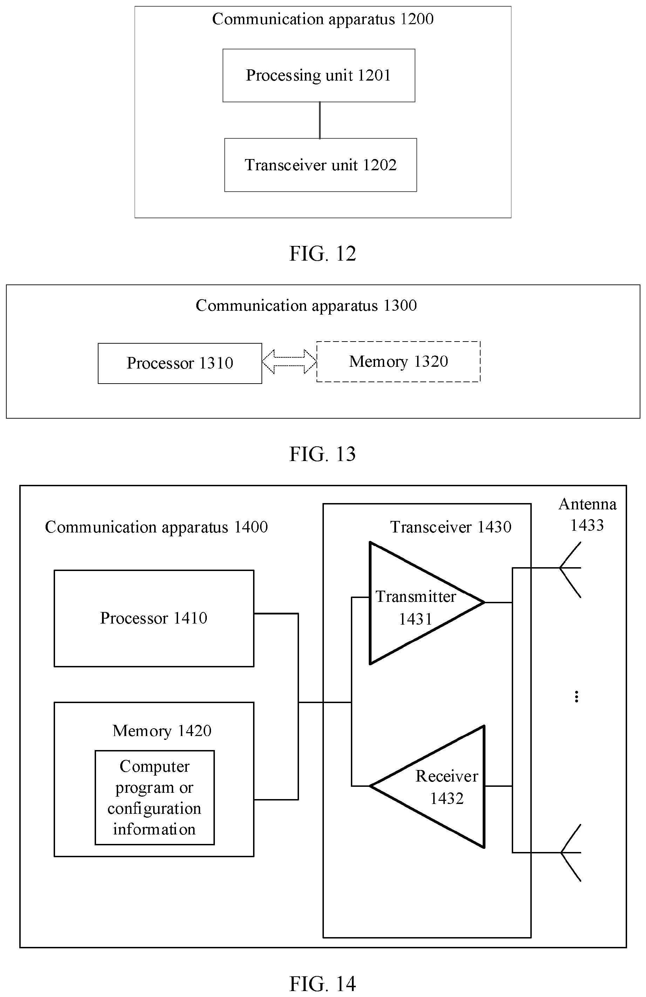

Based on the concepts of the foregoing embodiments, with reference to FIG. 12, an embodiment of this application provides a communication apparatus 1200. The apparatus 1200 includes a processing unit 1201 and a transceiver unit 1202. The apparatus 1200 may be a communication apparatus, or may be an apparatus that is used in a communication apparatus and that can support the communication apparatus in performing the data transmission method.

The transceiver unit may also be referred to as a transceiver module, a transceiver, a transceiver machine, a transceiver apparatus, or the like. The processing unit may also be referred to as a processor, a processing board, a processing unit, a processing apparatus, or the like. Optionally, a component that is in the transceiver unit and that is configured to implement a receiving function may be considered as a receiving unit. It should be understood that the transceiver unit is configured to perform a sending operation and a receiving operation of the communication apparatus in the foregoing method embodiments, and a component that is in the transceiver unit and that is configured to implement a sending function is considered as a sending unit. That is, the transceiver unit includes the receiving unit and the sending unit.

In addition, it should be noted that, if the apparatus is implemented by using a chip or a chip circuit, the transceiver unit may be an input/output circuit and/or a communication interface, and perform an input operation (corresponding to the foregoing receiving operation) and an output operation (corresponding to the foregoing sending operation). The processing unit is an integrated processor, a microprocessor, or an integrated circuit.

The following describes in detail an implementation in which the apparatus 1200 is used in the transmit end or the receive end.

For example, operations performed by the units of the apparatus 1200 when the apparatus 1200 is used in the transmit end are described in detail.

In an optional implementation, the communication apparatus 1200 may be used in the transmit end, to perform the method performed by the transmit end, specifically, for example, the method performed by the transmit end in the foregoing embodiment shown in FIG. 8. The processing unit 1201 is configured to: during data retransmission, polar encode a first information bit sequence to obtain a first encoded bit sequence, where the first information bit sequence includes a first bit subchannel V1 and a second bit subchannel U1, the first bit subchannel corresponds to a first subcode of a polar code, the second bit subchannel corresponds to a second subcode of the polar code, and the polar code includes the first subcode and the second subcode. The processing unit 1201 is further configured to perform sub-block interleaving on the first encoded bit sequence based on a first length, where the first length is a length of an encoded bit sequence of the polar code. The transceiver unit 1202 is configured to output a result of the sub-block interleaving.

For example, operations performed by the units of the apparatus 1200 when the apparatus 1200 is used in the receive end are described in detail.

In an optional implementation, the communication apparatus 1200 may be used in the receive end, to perform the method performed by the receive end, specifically, for example, the method performed by the receive end in the foregoing embodiment shown in FIG. 8. The transceiver unit 1202 is configured to: during data retransmission, obtain a first encoded bit sequence, where the first encoded bit sequence is obtained by polar encoding a first information bit sequence, the first information bit sequence includes a first bit subchannel U1 and a second bit subchannel V1, the first bit subchannel corresponds to a first subcode of a polar code, the second bit subchannel corresponds to a second subcode of the polar code, and the polar code includes the first subcode and the second subcode. The processing unit 1201 is configured to perform sub-block deinterleaving on the first encoded bit sequence based on a first length, where the first length is a length of an encoded bit sequence of the polar code. The processing unit 1201 is further configured to polar decode a result of the sub-block deinterleaving to obtain the first information bit sequence.

Based on the concepts of the embodiments, as shown in FIG. 13, an embodiment of this application provides a communication apparatus 1300. The communication apparatus 1300 includes a processor 1310. Optionally, the communication apparatus 1300 may further include a memory 1320, configured to store instructions executed by the processor 1310, input data needed by the processor 1310 to run the instructions, or data generated by running the instructions by the processor 1310. The processor 1310 may implement the methods shown in the foregoing method embodiments by using the instructions stored in the memory 1320.

Based on the concepts of the embodiments, as shown in FIG. 14, an embodiment of this application provides a communication apparatus 1400. The communication apparatus 1400 may be a chip or a chip system. Optionally, in this embodiment of this application, the chip system may include a chip, or may include a chip and another discrete device.

The communication apparatus 1400 may include at least one processor 1410. The processor 1410 is coupled to a memory. Optionally, the memory may be located inside the apparatus, or may be located outside the apparatus. For example, the communication apparatus 1400 may further include at least one memory 1420. The memory 1420 stores a computer program, configuration information, a computer program or instructions, and/or data necessary for implementing any one of the foregoing embodiments. The processor 1410 may execute the computer program stored in the memory 1420, to complete the method in any one of the foregoing embodiments. Optionally, the memory may be integrated with the processor.

The coupling in embodiments of this application may be an indirect coupling or a communication connection between apparatuses, units, or modules in an electrical form, a mechanical form, or another form, and is used for information exchange between the apparatuses, the units, or the modules. The processor 1410 may cooperate with the memory 1420. A specific connection medium between a transceiver 1430, the processor 1410, and the memory 1420 is not limited in this embodiment of this application.

The communication apparatus 1400 may further include the transceiver 1430, and the communication apparatus 1400 may exchange information with another device via the transceiver 1430. The transceiver 1430 may be a circuit, a bus, a transceiver, or any other apparatus that may be configured to exchange information, or is referred to as a signal transceiver unit. As shown in FIG. 14, the transceiver 1430 includes a transmitter 1431, a receiver 1432, and an antenna 1433. In addition, when the communication apparatus 1400 is a chip-type apparatus or a circuit, the transceiver in the communication apparatus 1400 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 1400 may be used in a communication apparatus. Specifically, the communication apparatus 1400 may be a communication apparatus, or may be an apparatus that can support the communication apparatus in implementing a function of the terminal device or the network device in any one of the foregoing embodiments. The memory 1420 stores a computer program, a computer program or instructions, and/or data necessary for implementing a function of the terminal device or the network device in any one of the foregoing embodiments. The processor 1410 may execute the computer program stored in the memory 1420, to complete the method performed by the terminal device or the network device in any one of the foregoing embodiments.

The communication apparatus 1400 provided in this embodiment may be used in a transmit end or a receive end, to complete the method performed by the transmit end or the receive end. Therefore, for technical effects that can be achieved by this embodiment, refer to the foregoing method embodiments. Details are not described herein again.

In embodiments of this application, the processor may be a general purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of instruction or data structure and that can be accessed by a computer, but is not limited thereto. The memory in embodiments of this application may alternatively be a circuit or any other apparatus that can implement a storage function, and is configured to store a computer program, a computer program or instructions, and/or data.

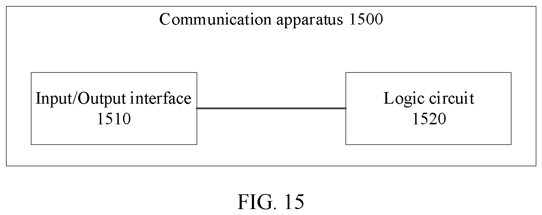

Based on the foregoing embodiments, with reference to FIG. 15, an embodiment of this application further provides another communication apparatus 1500, including an input/output interface 1510 and a logic circuit 1520. The input/output interface 1510 is configured to receive code instructions and transmit the code instructions to the logic circuit 1520. The logic circuit 1520 is configured to run the code instructions to perform the method performed by the transmit end or the receive end in any one of the foregoing embodiments.

The following describes in detail operations performed by the apparatus 1500 used in the transmit end or the receive end.

In an optional implementation, the communication apparatus 1500 may be used in the transmit end, to perform the method performed by the transmit end, specifically, for example, the method performed by the transmit end in the foregoing embodiment shown in FIG. 8. The logic circuit 1520 is configured to: during data retransmission, polar encode a first information bit sequence to obtain a first encoded bit sequence, where the first information bit sequence includes a first bit subchannel V1 and a second bit subchannel U1, the first bit subchannel corresponds to a first subcode of a polar code, the second bit subchannel corresponds to a second subcode of the polar code, and the polar code includes the first subcode and the second subcode. The logic circuit 1520 is further configured to perform sub-block interleaving on the first encoded bit sequence based on a first length, where the first length is a length of an encoded bit sequence of the polar code. The input/output interface 1510 is configured to output a result of the sub-block interleaving.

In an optional implementation, the communication apparatus 1500 may be used in the receive end, to perform the method performed by the receive end, specifically, for example, the method performed by the receive end in the foregoing embodiment shown in FIG. 8. The input/output interface 1510 is configured to: during data retransmission, input a first encoded bit sequence, where the first encoded bit sequence is obtained by polar encoding a first information bit sequence, the first information bit sequence includes a first bit subchannel U1 and a second bit subchannel V1, the first bit subchannel corresponds to a first subcode of a polar code, the second bit subchannel corresponds to a second subcode of the polar code, and the polar code includes the first subcode and the second subcode. The logic circuit 1520 is configured to perform sub-block deinterleaving on the first encoded bit sequence based on a first length, where the first length is a length of an encoded bit sequence of the polar code. The logic circuit 1520 is further configured to polar decode a result of the sub-block deinterleaving to obtain the first information bit sequence.

The communication apparatus 1500 provided in this embodiment may be used in a transmit end or a receive end, to perform the method performed by the transmit end or the receive end. Therefore, for technical effects that can be achieved by this embodiment, refer to the foregoing method embodiments. Details are not described herein again.

Based on the foregoing embodiments, an embodiment of this application further provides a communication system. The system includes at least one transmit end and at least one receive end. For technical effects that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the transmit end or the receive end in any one of the foregoing embodiments is implemented. The computer-readable storage medium may include any medium that can store program code, for example, a USB flash drive, a removable hard disk, a read-only memory, a random access memory, a magnetic disk, or an optical disc.

To implement functions of the communication apparatuses in FIG. 12 to FIG. 15, an embodiment of this application further provides a chip, including a processor, configured to support the communication apparatuses in implementing a function of the transmit end or the receive end in the foregoing method embodiments. In a possible design, the chip is connected to a memory, or the chip includes a memory. The memory is configured to store a computer program or instructions and data that are necessary for the transmit end or the receive end.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

## Claims

1. A data transmission method, comprising:
polar encoding a to-be-encoded bit sequence to obtain an encoded bit sequence, wherein
the to-be-encoded bit comprises a first information bit sequence and a second information bit sequence, a subchannel set corresponding to the first information bit sequence comprises a first subchannel set and/or a second subchannel set, the first subchannel set corresponds to a first subcode of a polar code, the second subchannel set corresponds to a second subcode of the polar code, a subchannel set corresponding to the second information bit sequence comprises a third subchannel set and/or a fourth subchannel set, the third subchannel set corresponds to the first subcode, and the fourth subchannel set corresponds to the second subcode;
performing interleaving on the to-be-encoded bit sequence; and
outputting a result of the interleaving.

2. The method according to claim 1, perform interleaving on the to-be-encoded bit sequence comprises:
performing sub-block interleaving on the encoded bit sequence based on a first length, wherein the first length is a length of the encoded bit sequence.

3. The method according to claim 2, performing sub-block interleaving on the encoded bit sequence based on the first length comprises:
performing sub-block interleaving on the first encoded bit sequence based on a first pattern and the first length, wherein
the first pattern is [0 1 2 4 3 5 6 7 8 16 9 17 10 18 11 19 12 20 13 21 14 22 15 23 24 25 26 28 27 29 30 31].

4. The method according to claim 2 or 3, further comprising:
performing rate matching on a result of the sub-block interleaving, wherein the rate matching comprises shortening each sub-block comprised in the result of the sub-block interleaving.

5. The method according to claim 4, wherein shortening each sub-block comprised in the result of the sub-block interleaving comprises:
shortening each sub-block from back to front, or shortening each bit-reversed sub-block from back to front, or shortening each sub-block in a fixed order.

6. A data transmission method, comprising:
obtaining a received symbol sequence, wherein the received symbol sequence corresponds to an encoded bit sequence, and the encoded bit sequence is obtained by polar encoding a to-be-encoded bit sequence; and the to-be-encoded bit comprises a first information bit sequence and a second information bit sequence, a subchannel set corresponding to the first information bit sequence comprises a first subchannel set and/or a second subchannel set, the first subchannel set corresponds to a first subcode of a polar code, the second subchannel set corresponds to a second subcode of the polar code, a subchannel set corresponding to the second information bit sequence comprises a third subchannel set and/or a fourth subchannel set, the third subchannel set corresponds to the first subcode, and the fourth subchannel set corresponds to the second subcode; and
performing deinterleaving on the received symbol sequence.

7. The method according to claim 6, performing deinterleaving on the received symbol sequence comprises:
performing sub-block deinterleaving on the received symbol sequence based on a first length, wherein the first length is a length of the encoded bit sequence.

8. The method according to claim 7, performing sub-block deinterleaving on the received symbol sequence based on the first length comprises:
performing sub-block deinterleaving on the received symbol sequence based on a first pattern and the first length, wherein
the first pattern is [0 1 2 4 3 5 6 7 8 16 9 17 10 18 11 19 12 20 13 21 14 22 15 23 24 25 26 28 27 29 30 31].

9. The method according to claim 1 or 6, wherein the encoded bit sequence comprises a first encoded bit sequence corresponding to the first information bit sequence and a second encoded bit sequence corresponding to the second information bit sequence, the first encoded bit sequence is used for retransmission, and the second encoded bit sequence is used for initial transmission; and
the first encoded bit sequence comprises a first encoded bit set and a second encoded bit set, the first encoded bit set corresponds to the first subcode, the second encoded bit set corresponds to the second subcode, the second encoded bit sequence comprises a third encoded bit set and a fourth encoded bit set, the third encoded bit set corresponds to the first subcode, and the fourth encoded bit set corresponds to the second subcode.

10. The method according to claim 9, wherein a subchannel set corresponding to the first information bit sequence comprises a fifth subchannel, a subchannel set corresponding to the second information bit sequence comprises a sixth subchannel, the fifth subchannel is in a one-to-one correspondence with the sixth subchannel, values of bits on corresponding subchannels in the fifth subchannel and the sixth subchannel are the same, the fifth subchannel corresponds to the first subcode, and the sixth subchannel corresponds to the first subcode.

11. The method according to claim 10, wherein the fifth subchannel is determined based on a seventh subchannel of a polar code bit sequence with a length of N₂, the sixth subchannel is determined based on an eighth subchannel of a polar code bit sequence with a length of N₁, N₂ is the length of the encoded bit sequence, and N₁ is a length of the first encoded bit sequence or a length of the second encoded bit sequence; and
the seventh subchannel comprises K subchannels with high reliability of the polar code sequence with a length of N₂, the eighth subchannel comprises K subchannels with high reliability of the polar code sequence with a length of N₁, and K is a positive integer.

12. The method according to claim 11, wherein the sixth subchannel corresponds to a subchannel that is in a difference set between the seventh subchannel and the eighth subchannel and that corresponds to the first subcode, and the fifth subchannel corresponds to a subchannel that is in a difference set between the eighth subchannel and the seventh subchannel and that corresponds to the first subcode.

13. The method according to claim 12, wherein the sixth subchannel comprises a subchannel that is in the seventh subchannel and that corresponds to a part or all of subchannels in the third subchannel set, and the fifth subchannel comprises a subchannel that is in the eighth subchannel and that corresponds to a part or all of subchannels in the first subchannel set; and
the third subchannel set is a subchannel that is in the subchannel set corresponding to the second information bit sequence and that corresponds to the first subcode, and the first subchannel set is a subchannel that is in the subchannel set corresponding to the first information bit sequence and that corresponds to the first subcode.

14. The method according to claim 13, wherein the sixth subchannel comprises a part or all of subchannels that are in the seventh subchannel and that correspond to the third subchannel set, and does not comprise a subchannel that is in the eighth subchannel and that corresponds to the third subchannel set.

15. The method according to any one of claims 1 to 14, wherein the subchannel set corresponding to the first information bit sequence comprises a ninth subchannel, the subchannel set corresponding to the second information bit sequence comprises a tenth subchannel, the ninth subchannel is in a one-to-one correspondence with the tenth subchannel, values on corresponding subchannels in the ninth subchannel and the tenth subchannel are the same, the ninth subchannel corresponds to the second subcode, and the tenth subchannel corresponds to the second subcode.

16. The method according to claim 15, wherein the ninth subchannel is determined based on the seventh subchannel of the polar code bit sequence with a length of N₂, the tenth subchannel is determined based on the eighth subchannel of the polar code bit sequence with a length of N₁, N₂ is the length of the encoded bit sequence, and N₁ is the length of the first encoded bit sequence used for retransmission that is comprised in the encoded bit sequence or the length of the second encoded bit sequence used for initial transmission that is comprised in the encoded bit sequence; and
the seventh subchannel comprises K subchannels with high reliability of the polar code sequence with a length of N₂, the eighth subchannel comprises K subchannels with high reliability of the polar code sequence with a length of N₁, and K is a positive integer.

17. The method according to claim 16, wherein the tenth subchannel comprises a subchannel that is in the difference set between the seventh subchannel and the eighth bit and that corresponds to the second subcode, and the ninth subchannel comprises a subchannel that is in the difference set between the eighth subchannel and the seventh subchannel and that corresponds to the second subcode.

18. The method according to claim 17, wherein the tenth subchannel comprises a part or all of subchannels that are in the seventh subchannel and that correspond to the fourth subchannel set, and the ninth subchannel comprises a part or all of subchannels that are in the eighth subchannel and that correspond to the second subchannel set; and
the fourth subchannel set is a subchannel that is in the subchannel set corresponding to the second information bit sequence and that corresponds to the second subcode, and the second subchannel set is a subchannel that is in the subchannel set corresponding to the first information bit sequence and that corresponds to the second subcode.

19. The method according to claim 18, wherein the tenth subchannel comprises the part or all of the subchannels that are in the seventh subchannel and that correspond to the fourth subchannel, and does not comprise a subchannel that is in the eighth subchannel and that corresponds to the fourth subchannel.

20. A communication apparatus, comprising a processor and a memory, wherein
the memory is configured to store a computer program or instructions; and
the processor is configured to execute the computer program or the instructions in the memory, to enable the apparatus to perform the method according to any one of claims 1 to 5, and 9 to 19, or enable the apparatus to perform the method according to any one of claims 6 to 19.

21. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 5, and 9 to 19, or the electronic apparatus is enabled to perform the method according to any one of claims 6 to 19.

22. A computer program product, comprising computer-executable instructions, wherein when the computer-executable instructions are run on a computer, the computer is enabled to perform the method according to any one of claims 1 to 5, and 9 to 19, or the computer is enabled to perform the method according to any one of claims 6 to 19.

23. A chip system, wherein the chip system comprises:
a communication interface; and
a processor, configured to receive or send a signal through the communication interface, to cause the method according to any one of claims 1 to 5, and 9 to 19 to be performed, or cause the method according to any one of claims 6 to 19 to be performed.
